(19) Europäisches Patentamt
European Patent Office
Office européen des brevets

(11) **EP 4 773 086 A1**

(12) **EUROPEAN PATENT APPLICATION**
published in accordance with Art. 153(4) EPC

(43) Date of publication:
**08.07.2026   Bulletin 2026/28**

(21) Application number: **24890256.1**

(22) Date of filing: **26.08.2024**

(51) International Patent Classification (IPC):
*G06T 17/00* (2006.01)

(86) International application number:
**PCT/CN2024/114603**

(87) International publication number:
**WO 2025/102894 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.11.2023   CN 202311525690**

(71) Applicants:
• **Tencent Technology (Shenzhen) Company
Limited
Shenzhen, Guangdong 518057 (CN)**

• **Oriental Power Holdings Limited
Wanchai, Hong Kong (HK)**

(72) Inventors:
• **LI, Yang
Shenzhen, Guangdong 518057 (CN)**
• **JI, Pan
Shenzhen, Guangdong 518057 (CN)**
• **LI, Hongdong
Hong Kong (CN)**

(74) Representative: **Reddie & Grose LLP
The White Chapel Building
10 Whitechapel High Street
London E1 8QS (GB)**

(54) **SCENE MODEL GENERATION METHOD AND RELATED APPARATUS**

(57)     Provided in the embodiments of the present application are a three-dimensional scene model generation method and a related apparatus. The embodiments of the present application can be applied to various scenarios such as cloud technology, artificial intelligence, virtual reality, and games. The method provided in the embodiments of the present application comprises: partitioning a two-dimensional scene graph obtaining M pieces of two-dimensional scene information by means of an encoding network and on the basis of two-dimensional scene information corresponding to M two-dimensional scene sub-graphs which are obtained by means of partitioning; by means of a diffusion sub-model, converting the M pieces of two-dimensional scene information into corresponding M three-dimensional scene sub-blocks; and then merging the three-dimensional scene sub-blocks to generate a three-dimensional scene. By means of performing partitioning on a two-dimensional scene graph of a large scene so as to generate corresponding two-dimensional scene sub-graphs, and merging three-dimensional scene sub-blocks to generate a three-dimensional scene of a large-scale scene corresponding to the two-dimensional scene graph of the large scene, the inconsistency of overlapping parts of the sub-blocks is eliminated, thus ensuring the accuracy of a three-dimensional training scene.

FIG. 2

## Description

## FIELD OF THE TECHNOLOGY

This application relates to the field of three-dimensional technologies, and in particular, to a scene model generation technology.

## BACKGROUND OF THE DISCLOSURE

Three-dimensional (3D) scene model generation is a technology for creating a realistic 3D virtual environment by using computer graphics and other related technologies. Currently, the 3D scene model generation technology has been widely applied to fields such as games, movies, animations, building design, industrial design, virtual reality, and augmented reality. In these fields, the 3D scene model generation technology can help manufactures and designers create a realistic virtual environment, thereby improving quality and an effect of a work.

Currently, a 3D scene generation technology mainly obtains a depth image (an RGB-D image) based on a depth estimation model, and fuses a plurality of depth images to generate a 3D scene. However, the plurality of depth images generated by using the technology cannot ensure consistency with each other, thereby causing a problem of generating an incorrect 3D scene.

## SUMMARY

Embodiments of this application provide a 3D scene model generation method and related apparatus. A two-dimensional (2D) scene graph of a large scene is partitioned to generate corresponding 2D scene subgraphs, and 3D scene sub-blocks are merged to eliminate inconsistency of overlapping parts of sub-blocks, and generate a 3D scene of a large-scale scene corresponding to the 2D scene graph of the large scene, thereby ensuring accuracy of a 3D training scene.

An aspect of this application provides a 3D scene model generation method. The method is executable by a computer device and includes:

   obtaining a 2D scene graph, the 2D scene graph including configuration information of a to-be-generated 3D scene;

   partitioning the 2D scene graph to obtain M 2D scene sub-graphs, from which at least two 2D scene sub-graphs overlap with each other to result in at least one first overlapping region, M being an integer greater than 1;

   encoding the M 2D scene sub-graphs respectively through an encoding network in a 3D scene generation model to generate M pieces of 2D scene information; and

inputting the M pieces of 2D scene information to a diffusion sub-model in the 3D scene generation model to generate a 3D scene model, the diffusion sub-model being configured to generate M 3D scene sub-blocks according to the M pieces of 2D scene information, the M 3D scene sub-blocks including M pieces of tri-plane feature information, and the diffusion sub-model being further configured to merge the M 3D scene sub-blocks into the 3D scene by performing fusion processing on pieces of tri-plane feature information corresponding to 2D scene sub-graphs in which the overlapping region exists, the tri-plane feature information including 2D information of the 2D scene information in three planes perpendicular to one another.

Another aspect of this application provides a 3D scene model generation apparatus. The apparatus is deployed on a computer device, and includes: a 2D scene graph obtaining module, a 2D scene graph partitioning module, a 2D scene information generation module, and a 3D scene generation module. Specifically:
The 2D scene graph obtaining module is configured to obtain a 2D scene graph, the 2D scene graph including configuration information of a to-be-generated 3D scene.

The 2D scene graph partitioning module is configured to partition the 2D scene graph to obtain M 2D scene sub-graphs, from which at least two 2D scene sub-graphs overlap with each other to result in at least one first overlapping region, M being an integer greater than 1.

The 2D scene information generation module is configured to encode the M 2D scene sub-graphs respectively through an encoding network in a 3D scene generation model to generate M pieces of 2D scene information.

The 3D scene generation module is configured to input the M pieces of 2D scene information to a diffusion sub-model in the 3D scene generation model to generate a 3D scene model, the diffusion sub-model being configured to generate M 3D scene sub-blocks according to the M pieces of 2D scene information, the M 3D scene sub-blocks including M pieces of tri-plane feature information, and the diffusion sub-model being further configured to merge the M 3D scene sub-blocks into the 3D scene by performing fusion processing on pieces of tri-plane feature information corresponding to 2D scene sub-graphs in which the overlapping region exists, the tri-plane feature information including 2D information of the 2D scene information in three planes perpendicular to one another.

Another aspect of this application provides a computer device, including

   a memory, a transceiver, a processor, and a bus system,

   the memory being configured to store a program;

the processor being configured to execute the program in the memory, the executing including performing the method according to the foregoing aspects; and

the bus system being configured to connect the memory and the processor to cause the memory and the processor to communicate with each other.

Another aspect of this application provides a computer-readable storage medium, having instructions stored therein. The instructions, when run on a computer, cause the computer to perform the method according to the foregoing aspects.

Another aspect of this application provides a computer program product. The computer program product includes a computer program. The computer program is stored in a computer-readable storage medium. A processor of a computer device reads the computer program from the computer-readable storage medium, and executes the computer program, to cause the computer device to perform the method according to the foregoing aspects.

In view of the foregoing technical solution, embodiments of this application have the following advantages:

This application provides a 3D scene model generation method and a related apparatus. The method includes: obtaining a 2D scene graph, the 2D scene graph being configured to display configuration information of a to-be-generated 3D scene; partitioning the 2D scene graph to obtain M 2D scene sub-graphs, at least one overlapping region existing between the M 2D scene sub-graphs, and M being an integer greater than 1; encoding the M 2D scene sub-graphs by an encoding network in a 3D scene generation model to generate corresponding M pieces of 2D scene information; and inputting the M pieces of 2D scene information to a diffusion sub-model in the 3D scene generation model to generate a 3D scene, the diffusion sub-model being configured to correspondingly generate M 3D scene sub-blocks according to the M pieces of 2D scene information, the M 3D scene sub-blocks corresponding to M pieces of tri-plane feature information, and merge the M 3D scene sub-blocks into the 3D scene by performing fusion processing on the M pieces of tri-plane feature information corresponding to the M 2D scene sub-graphs in which the overlapping region exists, the tri-plane feature information being configured for representing 2D information of the 2D scene information in three planes perpendicular to one another. According to the method provided in the embodiment of this application, the 2D scene graph is partitioned, the 2D scene information corresponding to the M 2D scene sub-graphs obtained by the partitioning are input to the diffusion sub-model, the M pieces of 2D scene information are converted into the corresponding M 3D scene sub-blocks by the diffusion sub-model, and the 3D scene sub-blocks are merged in a parameter-shared diffusion manner to generate the 3D scene. The 2D scene graph of the large scene is partitioned to generate the corresponding 2D scene sub-graphs, and the 3D scene sub-blocks are merged to generate the 3D scene of the large-scale scene corresponding to the 2D scene graph of the large scene, thereby eliminating inconsistency of overlapping parts of the sub-blocks, and ensuring the accuracy of the 3D training scene.

**BRIEF DESCRIPTION OF THE DRAWINGS**

FIG. 1 is a schematic diagram of architecture of a 3D scene model generation system according to an embodiment of this application;

FIG. 2 is a flowchart of a 3D scene model generation method according to an embodiment of this application;

FIG. 3 is a schematic diagram of an input and an output of a 3D scene model generation process according to an embodiment of this application;

FIG. 4 is a schematic diagram of an architecture of a partitioning process during generation of a 3D scene model according to an embodiment of this application;

FIG. 5 is a flowchart of a 3D scene model generation method according to another embodiment of this application;

FIG. 6 is a flowchart of a 3D scene model generation method according to another embodiment of this application;

FIG. 7 is a schematic diagram of a segmenting process of a 2D target scene according to an embodiment of this application;

FIG. 8 is a flowchart of a 3D scene model generation method according to another embodiment of this application;

FIG. 9 is a flowchart of a 3D scene model generation method according to another embodiment of this application;

FIG. 10 is a schematic diagram of performing weighted processing on overlapping vertices according to an embodiment of this application;

FIG. 11 is a flowchart of a 3D scene model generation method according to another embodiment of this application;

FIG. 12 is a schematic diagram of performing denoising by a diffusion network according to an embodiment of this application;

FIG. 13 is a flowchart of a 3D scene model generation method according to another embodiment of this application;

FIG. 14 is a schematic diagram of performing partitioning on a 3D training scene according to an embodiment of this application;

FIG. 15 is a schematic diagram of converting triplane feature information into SDF according to an embodiment of this application;

FIG. 16 is a schematic diagram of a structure of a 3D scene model generation apparatus according to an embodiment of this application;

FIG. 17 is a schematic diagram of a structure of a 3D scene model generation apparatus according to another embodiment of this application; and

FIG. 18 is a schematic diagram of a structure of a server according to an embodiment of this application.

## DESCRIPTION OF EMBODIMENTS

Embodiments of this application provide a three-dimensional (3D) scene model generation method. A 2D scene graph of a large scene is partitioned to generate corresponding 2D scene sub-graphs, and 3D scene sub-blocks are merged to eliminate inconsistency of overlapping parts of the sub-blocks, and generate a 3D scene of a large-scale scene corresponding to the 2D scene graph of the large scene, thereby ensuring accuracy of a 3D training scene, and at the same time, resolving problems of object shape distortion, low precision, and an excessively high error rate of a 3D scene model in a 3D scene generation process in the related art.

In the specification, claims, and accompanying drawings of this application, the terms "first", "second", "third", "fourth", and so on (if any) are intended to distinguish between similar objects but do not necessarily indicate a specific order or sequence. It is to be understood that the data termed in such a way are interchangeable in appropriate circumstances, so that the embodiments of this application described herein can be implemented in orders other than the order illustrated or described herein. Moreover, the terms "including", "correspond to" and any variant thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

The embodiments of this application may implement 3D scene model generation automatically through an artificial intelligence (AI) technology.

3D scene model generation is a technology for creating a realistic 3D virtual environment by using computer graphics and other related technologies. Currently, the 3D scene model generation technology has been widely applied to fields such as games, movies, animations, building design, industrial design, virtual reality, and augmented reality. In these fields, the 3D scene model generation technology can help manufactures and designers create a realistic virtual environment, thereby improving quality and an effect of a work.

Generation of a 3D scene model is an important research direction in the fields such as computer graphics, computer vision, and artificial intelligence. The significance thereof is to present objects and scenes in the real world in a 3D manner, thereby providing more real, more intuitive, and richer visual experience for people.

The generation of a 3D scene model may be applied to many fields, such as virtual reality, augmented reality, game development, movie production, building design, and industrial design. In the fields of virtual reality and augmented reality, the generation of a 3D scene model can provide more realistic immersive experience for a user, so that the user feels immersive. In the fields of game development and movie production, the generation of a 3D scene model can provide more vivid scenes and characters for games and movies, thereby improving quality and impressions of the games and movies. In the fields of building design and industrial design, the generation of a 3D scene model can help a designer better present a design solution, thereby improving design efficiency and quality.

The generation of the 3D scene model may further be applied to the education field, the medical field, and the like. In the education field, the generation of a 3D scene model can provide more intuitive and more vivid teaching experience for students, thereby improving learning interest and learning effects of the students. In the medical field, the generation of a 3D scene model can provide more accurate and more intuitive diagnosis and surgical planning for a doctor, thereby improving a medical level and a treatment effect.

The generation of a 3D scene model is of great significance and application value. It can provide more real, more intuitive, and richer visual experience for people, can also be applied to many fields, and provide strong support and help to development and progress of various fields.

Currently, a 3D scene generation technology has been widely applied, and a Text2Room technology is often used. The Text2Room is a technology for generating a 3D scene model based on a text description. First, a pre-trained 2D diffusion model is used to generate a 2D image, then a pre-trained depth estimation model is used to obtain a depth image (an RGB-D image), then a position of a camera is moved slightly from a previous frame, and the RGB-D image of the previous frame is extrapolated. By continuously moving the position of the camera, a plurality of frames of RGB-D images are obtained, and finally, the plurality of RGB-D images are fused to generate a 3D scene.

Although the Text2Room technology has achieved some results in 3D scene generation, it still has some disadvantages:

1) The technology excessively relies on a depth estimation model, and the depth estimation model is not very accurate, that is, the model often causes shape distortion of an object in a 3D scene, and has low precision; and due to a blocking problem, the 3D scene is usually incomplete.

(2) Text2Room expands a scene by moving a camera, but considering issues such as a field of view of the camera being blocked by a scene model when the camera moves, it is difficult for this technology to be applied to a large scene model except a single room.

3) A plurality of frames of RGB-D images generated by Text2Room cannot ensure consistency with each other, which usually causes an incorrect 3D scene.

An existing 3D scene generation method has defects such as low geometrical precision and difficulty in being extended to a large-scale scene. Therefore, an embodiment of this application proposes a 3D scene model generation method that can be used for generating a large-scale 3D scene. Specifically:

First, a 2D scene graph is obtained, the 2D scene graph being configured to display configuration information of a to-be-generated 3D scene. The 2D scene graph is partitioned to obtain M 2D scene sub-graphs, at least one overlapping region existing between the M 2D scene sub-graphs, and M being an integer greater than 1. Then, the M 2D scene sub-graphs are encoded respectively by an encoding network in a 3D scene generation model to generate M pieces of 2D scene information. Finally, the M pieces of 2D scene information are input to a diffusion sub-model in the 3D scene generation model, and the M pieces of 2D scene information are processed by the diffusion sub-model to generate a 3D scene, the diffusion sub-model being configured to generate M 3D scene sub-blocks according to the M pieces of 2D scene information, the M 3D scene sub-blocks corresponding to M pieces of tri-plane feature information, and merge the M 3D scene sub-blocks into the 3D scene by performing parameter-shared diffusion processing on the M pieces of tri-plane feature information corresponding to the M 2D scene sub-graphs in which the overlapping region exists, the tri-plane feature information being configured for representing 2D information of the 2D scene information in three planes perpendicular to one another.

According to the method provided in the embodiment of this application, the 2D scene graph is partitioned, the 2D scene information corresponding to the M 2D scene sub-graphs obtained by the partitioning are input to the diffusion sub-model, the M pieces of 2D scene information are converted into the corresponding M 3D scene sub-blocks by the diffusion sub-model, and the 3D scene sub-blocks are merged in a parameter-shared diffusion manner to generate the 3D scene. The 2D scene graph of the large scene is partitioned to generate the corresponding 2D scene sub-graphs, and the 3D scene sub-blocks are merged to generate the 3D scene of the large-scale scene corresponding to the 2D scene graph of the large scene, thereby eliminating inconsistency of overlapping parts of the sub-blocks, and ensuring the accuracy of the 3D training scene.

Application scenes of the method provided in the embodiment of this application include: scene generation for a large-scale 3D map in an open-world game, scene generation for extended reality (XR), scene generation for robot training, scene generation in the field of autonomous driving, and the like.

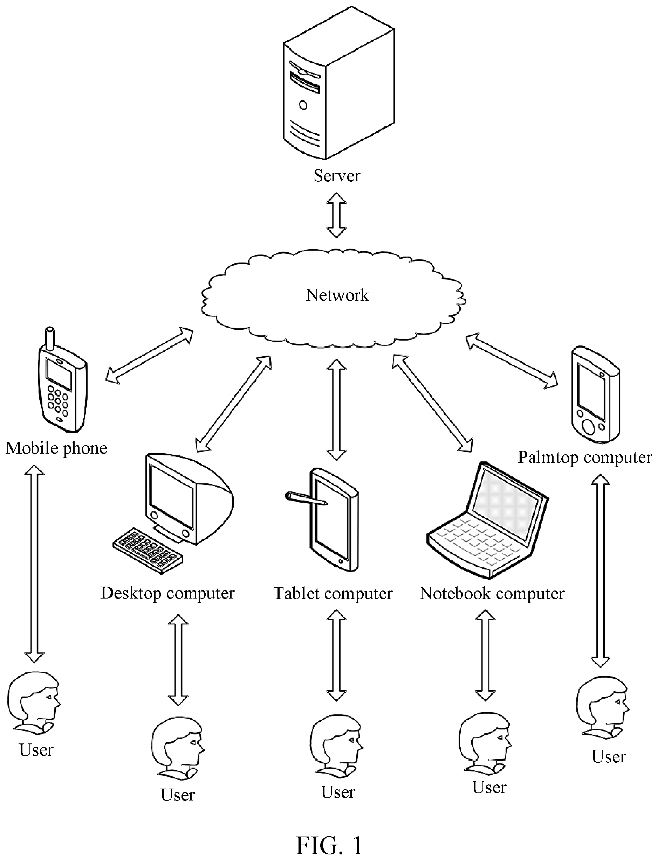

For ease of understanding, referring to FIG. 1, FIG. 1 is a diagram of an application environment of a 3D scene model generation method according to an embodiment of this application. As shown in FIG. 1, the 3D scene model generation method in this embodiment of this application is applied to a 3D scene model generation system. The 3D scene model generation system includes: a server and a terminal device. The server may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and artificial intelligence (AI) platform. The terminal may be a smartphone, a tablet computer, a notebook computer, a desktop computer, a smart speaker, a smartwatch, or the like, but is not limited thereto. The terminal and the server may be directly or indirectly connected in a wired or wireless communication manner. This is not limited in this embodiment of this application.

The server first obtains a 2D scene graph, the 2D scene graph being configured to display configuration information of a to-be-generated 3D scene. Then, the server partitions the 2D scene graph to obtain M 2D scene sub-graphs, at least one overlapping region existing between the M 2D scene sub-graphs, and M being an integer greater than 1. Then, the server encodes the M 2D scene sub-graphs respectively by an encoding network in a 3D scene generation model to generate M pieces of 2D scene information. Finally, the server inputs the M pieces of 2D scene information to a diffusion sub-model in the 3D scene generation model, the M pieces of 2D scene information are processed by the diffusion sub-model to generate a 3D scene, the diffusion sub-model being configured to generate M 3D scene sub-blocks according to the M pieces of 2D scene information, the M 3D scene sub-blocks corresponding to M pieces of tri-plane feature information, and merge the M 3D scene sub-blocks into the 3D scene by performing parameter-shared diffusion processing on the M pieces of tri-plane feature information corresponding to the M 2D scene sub-graphs in which the overlapping region exists, the tri-plane feature information being configured for representing 2D information of the 2D scene information in three planes perpendicular to one another.

Generation of a 3D scene model is widely applied to the game industry. The method provided in this embodiment of this application allows a large-scale, high-quality, and diversified 3D scene to be generated according to a user input. For example, the method may be used for automatically generating a large-scale 3D map in an open-world game.

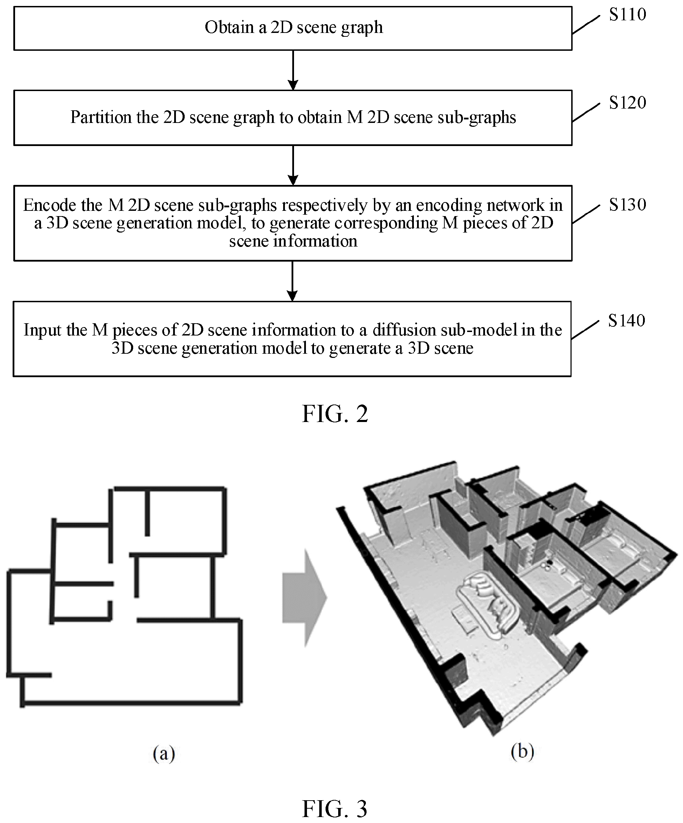

The following will describe a 3D scene model generation method in this application from the perspective of the server. The generation of a 3D scene model may be obtained with reference to FIG. 2, a 3D scene model generation method according to an embodiment of this application includes S110 to S140. Specifically: S110: Obtain a 2D scene graph.

The 2D scene graph is configured to display configuration information of a to-be-generated 3D scene.

The 2D scene graph is a layout diagram of a pre-generated 3D scene, and preferably, may be a top view of the 3D scene. For example, as shown in FIG. 3, FIG. 3 is a schematic diagram of generation of a 3D scene model according to an embodiment of this application. FIG. 3(a) is a 2D scene graph input by a user, and FIG. 3(b) is a 3D scene generated according to the 2D scene graph input by the user. A user may draw a 2D scene graph of a scene by a simple interactive interface, and obtain a corresponding 3D scene by inputting the 2D scene graph.

S120: Partition the 2D scene graph to obtain M 2D scene sub-graphs.

At least one overlapping region exists between the M 2D scene sub-graphs, M being an integer greater than 1. The overlapping region may be an overlapping region formed between at least two 2D scene sub-graphs in the M 2D scene sub-graphs. For example, an overlapping region formed between any two or more 2D scene sub-graphs belongs to the at least one overlapping region.

A target scene graph of the large scene may be partitioned into a plurality of smaller sub-graphs by partitioning the input 2D scene graph, so as to facilitate subsequent processing and generation of a 3D scene. Such a partitioning manner can better process complex layouts and details of the large scene, and improve efficiency and accuracy of generating a 3D scene.

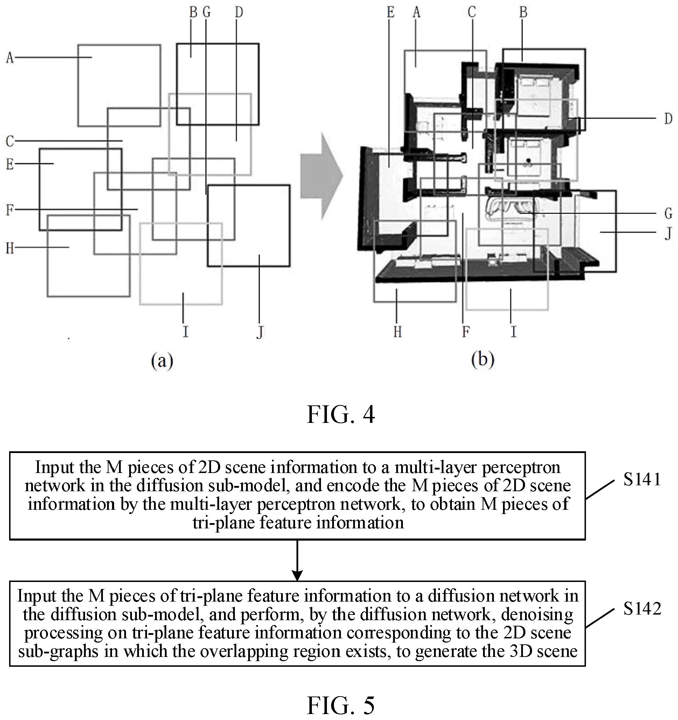

In the operation of partitioning the 2D scene graph, the input 2D scene graph is partitioned into M 2D scene sub-graphs. These sub-graphs may have an overlapping region, that is, they jointly cover a part of the original 2D scene graph. For ease of understanding, referring to FIG. 4, FIG. 4 is a schematic diagram of performing partitioning on a 2D scene graph. FIG. 4(a) is a schematic diagram of performing partitioning on a 2D scene graph, and FIG. 4(b) is a schematic diagram of a corresponding 3D scene generated according to 2D scene sub-graphs. It can be learned from FIG. 4 that when the 2D scene graph is partitioned, sub-graphs obtained through the partitioning include overlapping parts, and corresponding 3D scene sub-blocks are correspondingly generated. The 3D scene sub-blocks in which an overlapping region exists are spliced by using the sub-graphs including the overlapping parts, so as to generate a 3D scene.

S130: Encode the M 2D scene sub-graphs respectively by an encoding network in a 3D scene generation model to generate corresponding M pieces of 2D scene information.

These 2D scene sub-graphs are encoded by the encoding network to generate corresponding M pieces of 2D scene information. Each piece of 2D scene information is configured for representing pixel features of all pixel points in the 2D scene sub-graph. The encoding network is an important component in the 3D scene generation model, and functions to convert 2D scene sub-graphs into information that can be subsequently processed to generate a 3D scene. In this operation, the encoding network processes each of the 2D scene sub-graphs, extracts features and information therein, and converts the information into a representation manner that can be subsequently processed to generate a 3D scene. By encoding the M 2D scene sub-graphs, the corresponding M pieces of 2D scene information can be obtained, and the information may be configured for subsequent processing to generate a 3D scene. The information may include features such as objects, layouts, and textures in the sub-graphs, as well as information such as their positions and postures in a 3D space. By processing the 2D scene information for generation, a 3D scene may be obtained. The scene is composed of the original 2D scene graph and the sub-graphs obtained through the partitioning.

An implementation of S130 is not limited in this embodiment of this application. In a possible implementation, the M pieces of 2D scene information may be directly input to the encoding network, and the 2D scene information is directly encoded by the encoding network to obtain the corresponding 2D scene information.

In another possible implementation, M pieces of original pixel information corresponding to the M 2D scene sub-graphs may be first obtained. The original pixel information may be pixel point information of the sub-graph. Specifically, the original pixel information may be a color value, a luminance value, or the like of each pixel point. Then, the M 2D scene sub-graphs are input to the encoding network in the 3D scene generation model, and the M pieces of original pixel information corresponding to the M 2D scene sub-graphs are encoded by the encoding network to generate M pieces of 2D scene information. In this process, the encoding network performs feature extraction and encoding on the input original pixel information to generate feature vectors that can represent the original pixel information. These feature vectors are results of feature extraction and encoding performed by the encoding network on the original pixel information, and may be used in a subsequent process of generating a 3D scene. The encoding network functions to convert the original pixel information into a form that can be understood and processed by the 3D scene generation model, so as to generate the 3D scene subsequently. The original pixel information is encoded by the encoding network, so that the number of dimensions and complexity of data can be effectively reduced, thereby improving efficiency and accuracy of generating the 3D scene.

In an actual application, a structure and parameters of the encoding network need to be designed and adjusted according to a specific task and data, to obtain optimal performance and effect. At the same time, subsequent processing and optimization also need to be performed on an output result of the encoding network, to further improve quality and accuracy of the 3D scene generation.

S140: Input the M pieces of 2D scene information to a diffusion sub-model in the 3D scene generation model to generate a 3D scene.

The diffusion sub-model is configured to correspondingly generate M 3D scene sub-blocks according to the M pieces of 2D scene information, the M 3D scene sub-blocks corresponding to M pieces of tri-plane feature information, and the diffusion sub-model is further configured to merge the M 3D scene sub-blocks into the 3D scene by performing fusion processing on the M pieces of tri-plane feature information corresponding to the M 2D scene sub-graphs in which the overlapping region exists, the tri-plane feature information being configured for representing 2D information of the 2D scene information in three planes perpendicular to one another. The three planes perpendicular to one another refer to three orthogonal planes (XY, XZ, and YZ) having particular directions and purposes. The three planes perpendicular to one another are basic orthogonal planes in a 3D space, and respectively carry geometrical and texture information of the 3D scene from different perspectives. Each plane corresponds to a scene representation from one perspective. All of the planes constitute an efficient and extensible representation method of the 3D scene.

The M pieces of tri-plane feature information are generated according to the M pieces of 2D scene information. For example, the diffusion sub-model may generate the corresponding tri-plane feature information according to the 2D scene information, that is, convert the 2D scene information into the tri-plane feature information, so as to represent the 2D scene information in the three planes (Tri-plane) perpendicular to one another. The tri-plane feature information may be obtained before the 3D scene sub-block is generated, or may be obtained after the 3D scene sub-block is generated, or may be generated at the same time with the 3D scene sub-block. This is not limited in the embodiment of this application.

The M pieces of 2D scene information obtained through encoding is input to the diffusion sub-model in the 3D scene generation model, and the information is processed by the diffusion sub-model to generate the 3D scene. The diffusion sub-model is an important component in the 3D scene generation model, and functions to generate corresponding 3D scene sub-blocks according to the input 2D scene information and merge these sub-blocks into one 3D scene. In this operation, the diffusion sub-model processes each piece of 2D scene information to generate a corresponding 3D scene sub-block. These 3D scene sub-blocks are generated from original 2D scene information, and information such as their positions and postures in the 3D space is also included. The diffusion sub-model may generate corresponding tri-plane feature information according to the 2D scene information, and the information is configured for representing 2D information of the 2D scene information in the three planes perpendicular to one another. The tri-plane feature information may include features such as layouts and textures in the sub-blocks, as well as information such as their positions and postures in the 3D space. By performing fusion processing on the tri-plane feature information, the tri-plane feature information corresponding to the sub-blocks in which the overlapping region exists may be merged, thereby merging the sub-blocks into one 3D scene. Through processing of the diffusion sub-model, one 3D scene composed of the original 2D scene graph and the sub-graphs obtained through the partitioning may be obtained. Such a method can effectively process complex layouts and details of the large scene, and improve the efficiency and accuracy of generating the 3D scene.

There is an overlapping region in the M 3D scene sub-blocks, and therefore, in a process of performing fusion processing on the tri-plane feature information, parameter-shared diffusion processing may be performed on the overlapping region. The parameter sharing refers to that the M 3D scene sub-blocks share a parameter of the overlapping region, thereby avoiding repeatedly calculating or storing same information in different 3D scene sub-blocks, thus saving computing resources and storage. The diffusion processing is a process of gradually propagating information, and herein may refer to propagating a parameter of an overlapping region from one 3D scene sub-block to another 3D scene sub-block, thereby implementing parameter sharing, to ensure information continuity and consistency in the entire large-scale scene.

It can be known from the foregoing descriptions that the 3D scene generation model provided in this embodiment of this application is a model configured to generate a 3D scene based on a 2D scene graph, including an encoding network and a diffusion sub-model. The encoding network is responsible for extracting key information from the input 2D scene graph and converting the key information into a form suitable for subsequent processing. The encoding network may include a plurality of convolutional layers, configured for local features and spatial relationships in the 2D scene graph, for example, features such as objects, layouts, and textures included in the local features, as well as information such as their positions and postures in the 3D space.

In a preferred implementation, a denoising diffusion probabilistic model (DDPM) may be used as the diffusion sub-model in the 3D scene generation model. The DDPM is a generation model based on a diffusion process, and generates new samples by learning latent distribution of data. A core idea of the DDPM is to consider a data generation process as a diffusion process, that is, a process of gradually evolving from an initial state to a final state. By learning a probability density function of the diffusion process, the DDPM can generate a sample in a final state with a given initial state. A training process of the DDPM model includes two phases: a forward diffusion process and a reverse diffusion process. In the forward diffusion process, the DDPM starts from a random initial state, and gradually evolves to a final state through a series of diffusion operations. In each of the diffusion operations, the DDPM adds some noise to a current state, to simulate randomness in the diffusion process. In the reverse diffusion process, the DDPM starts from a final state, and gradually restores to an initial state through a series of denoising operations. In each of the denoising operations, the DDPM attempts to remove noise in a current state to recover an original sample. A generation process of the DDPM is to gradually evolve to a final state by using the forward diffusion process if an initial state is given, and then gradually restore to the initial state by using the reverse diffusion process, to finally obtain a generated sample.

To ensure accuracy of the 3D generated scene, it is necessary to achieve a smooth transition at connections between sub-blocks. In this embodiment of this application, a 3D large scene is obtained by merging diffusion generation processes of a plurality of small scenes.

In the method provided in this embodiment of this application, by sharing parameters of overlapping regions in a plurality of diffusion generation processes, geometric shapes of a plurality of overlapping 3D blocks may be seamlessly combined. Specifically, projection representations of points of the overlapping part on two pieces of tri-plane feature information are determined, weighted processing is performed on the projection representations, and a result is regarded as an input of a next denoising generation iteration, to finally obtain a 3D generated scene. In this method, first, the projection representations of the points of the overlapping part on the two pieces of tri-plane feature information need to be determined. These projection representations may be obtained by projecting the points of the overlapping part to two tri-planes and calculating coordinates of the points of the overlapping part on the tri-planes. Then, weighted processing is performed on these projection representations to consider their relative importance on the two tri-planes. The weighted processing may be completed by calculating a weight of each of the projections and adding the weights together. Next, the weighted projection representations are used as the input of the next denoising generation iteration. During each iteration, a new scene is generated by using a diffusion generation process. This process includes performing denoising on a scene and generating new details, to improve quality and accuracy of the scene. During each iteration, the weighted projection representation is used as an input, to ensure that geometric shapes of a plurality of overlapping 3D blocks can be seamlessly combined. By using this method, diffusion generation processes of a plurality of small scenes may be merged into one 3D large scene, while ensuring the accuracy and quality of the scene.

According to the 3D scene model generation method provided in the embodiment of this application, the 2D scene graph is partitioned, the 2D scene information corresponding to the M 2D scene sub-graphs obtained by the partitioning are input to the diffusion sub-model, the M pieces of 2D scene information are converted into the corresponding M 3D scene sub-blocks by the diffusion sub-model, and the 3D scene sub-blocks are merged in a parameter-shared diffusion manner to generate the 3D scene. The 2D scene graph of the large scene is partitioned to generate the corresponding 2D scene sub-graphs, and the 3D scene sub-blocks are merged to generate the 3D scene of the large-scale scene corresponding to the 2D scene graph of the large scene, thereby eliminating inconsistency of overlapping parts of the sub-blocks, and ensuring the accuracy of the 3D scene.

This embodiment of this application provides a simple and practical high-quality large-scale 3D scene generation tool. This embodiment of this application can give rise to new and diverse applications in fields such as extended reality (XR), robotics, and autonomous driving, and have broad application prospects, including generating large-scale user-defined 3D scene contents required by a metaverse, generating training scenes required by robots/autonomous driving automobiles, and the like. This embodiment of this application is widely applied to the game industry, including being used as a large-scale 3D scene editor of an open-world game, being used as a game development auxiliary tool to improve design and development efficiency of a game 3D scene map, and the like.

In an embodiment of the 3D scene model generation method according to the embodiment corresponding to FIG. 2 of this application, reference is made to FIG. 5, S140 further includes S141 to S142. Specifically:
S141: Input the M pieces of 2D scene information into a multi-layer perceptron network in the diffusion sub-model, and encode the M pieces of 2D scene information by the multi-layer perceptron network, to obtain M pieces of tri-plane feature information.

A basic structure of a multi-layer perceptron includes an input layer, a hidden layer, and an output layer. The input layer receives input data, the hidden layer includes a plurality of neurons configured to perform feature extraction and conversion on the input data, and the output layer outputs a final classification or regression result. In the multi-layer perceptron, information transmission is performed between neurons through connections. Each neuron has an activation function, configured for performing nonlinear transformation on an input weighted sum. The selection of the activation function has an important impact on the performance and generalization capability of the multi-layer perceptron. The multi-layer perceptron implements different tasks by adjusting the number and the connection manner of neurons in the hidden layer. In a training process, a connection weight between neurons is adjusted by using a back propagation algorithm, to minimize a loss function or maximize classification accuracy.

The multi-layer perceptron network is a common neural network structure, which can perform feature extraction and encoding on input information, to obtain a feature vector that can represent the input information. In this operation, each piece of 2D scene information is processed by a pre-trained multi-layer perceptron network to extract features and information in the 2D scene information, and encode these features and information into a piece of tri-plane feature information. Specifically, the M pieces of 2D scene information are mapped to three planes perpendicular to one another by the multi-layer perceptron network, to obtain M pieces of tri-plane feature information respectively corresponding to the three planes perpendicular to one another.

More specifically, each piece of pixel information in each piece of 2D scene information is mapped to the three planes perpendicular to one another by the multi-layer perceptron network, to obtain tri-plane feature information respectively corresponding to the three planes perpendicular to one another. For example, if the 2D scene information is $(x_1, yi, z_1)$, first, 3D position information corresponding to each pixel in the 2D scene graph is mapped to three planes (X1, Y1, Z1) perpendicular to one another, to obtain tri-plane feature information respectively corresponding to the three planes perpendicular to one another. Plane feature information in the X1 plane is $(x_1, y_1)$; plane feature information in the Y1 plane is $(y_1, z_1)$; and plane feature information in the Z1 plane is $(x_1, zi)$. Next, the tri-plane feature information respectively corresponding to the three planes perpendicular to one another is integrated, to obtain original tri-plane feature information $[(x_1, y_1), (y_1, z_1), (x_1, z_1)]$ corresponding to the 2D scene information. Finally, the original tri-plane feature information is integrated by an encoder, to obtain a tri-plane feature information set $[(x_2, y_2), (y_2, z_2), (x_2, z_2)]$ corresponding to the 2D scene information, where $x_2=a{\times}x_1+b{\times}y_1$, $y_2=b{\times}y_1+c{\times}z_1$, $z_2= a{\times}x_1+c{\times}z_1$, and a, b, and c are relative positional parameters between a plane (X1, Y1, Z1) and a plane (X2, Y2, Z2).

In another preferred implementation, each piece of 2D scene information is input into a multi-layer perceptron network, and signed distance function information corresponding to the 2D scene information is predicted by the multi-layer perceptron network according to the 2D scene information, where each signed distance function information set includes at least one piece of signed distance function information, and the signed distance function information is configured for representing 3D position information of a generated pixel point. A value of the signed distance function (SDF) is a sign of a distance to a surface of an object, that is, if a point is located outside the object, the value of the SDF is positive; if the point is located inside the object, the value of the SDF is negative; and if the point is located on the surface of the object, the value of the SDF is zero. Therefore, the SDF may be configured for representing a surface shape and a position of an object. The SDF may be calculated in a plurality of manners, and a common method is representing the SDF by using a distance field. The distance field is a 3D array in which each element represents a distance from a point to a surface of an object in a space. The SDF can be easily calculated by calculating the distance field.

S142: Input the M pieces of tri-plane feature information into a diffusion network in the diffusion sub-model, and perform, by the diffusion network, denoising processing on tri-plane feature information corresponding to the 2D scene sub-graphs in which the overlapping region exists to generate the 3D scene.

The M pieces of tri-plane feature information are input to the diffusion network in the diffusion sub-model. The diffusion network is a deep learning model based on a diffusion model, and can perform denoising and generation processing on input information. In this operation, the diffusion network performs parameter-shared denoising processing on the tri-plane feature information corresponding to the 2D scene sub-graphs in which the overlapping region exists. Specifically, for each of the 2D scene sub-graphs, the diffusion network learns a corresponding parameter vector, configured for representing feature information of the sub-graph. When sub-graphs having an overlapping region are processed, the diffusion network may share parameter vectors corresponding to the sub-graphs, so as to reduce repeated calculation and impact of noise. By means of parameter sharing, the diffusion network can better process the sub-graphs having the overlapping region, thereby improving the accuracy and quality of generating the 3D scene. In the denoising processing process, the diffusion network optimizes and adjusts input tri-plane feature information to reduce impacts of noises and errors. Through processing of the diffusion network, a more accurate and clearer 3D scene can be obtained. The scene is composed of the original 2D scene graph and the sub-graphs obtained through the partitioning. The parameter sharing and denoising processing of the diffusion network are based on training data and a model structure. In an actual application, adjustment and optimization need to be performed according to a specific scene and data, so as to obtain an optimal processing effect.

According to the 3D scene model generation method provided in this embodiment of this application, the diffusion network performs the parameter-shared denoising processing on the tri-plane feature information corresponding to the 2D scene sub-graphs in which the overlapping region exists, that is, performs denoising and optimization on the tri-plane feature information corresponding to these sub-graphs, so that the tri-plane feature information can better represent the original 2D scene information, thereby effectively processing complex layouts and details of the large scene, and improving the efficiency and accuracy of generating the 3D scene.

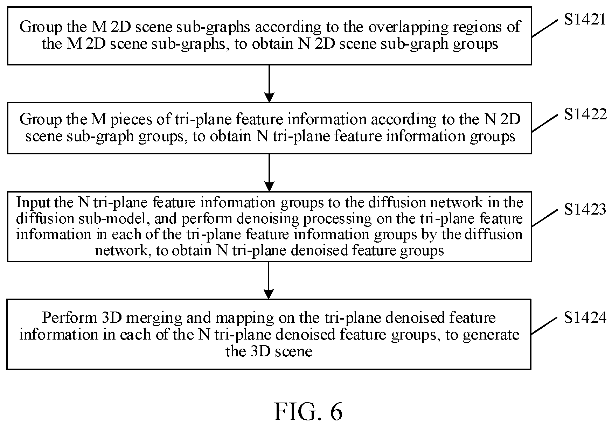

In an embodiment of the 3D scene model generation method according to the embodiment corresponding to FIG. 5 of this application, reference is made to FIG. 6, S142 further includes S1421 to S1424. Specifically:

S1421: Group the M 2D scene sub-graphs according to the overlapping regions of the M 2D scene sub-graphs, to obtain N 2D scene sub-graph groups.

Each of the 2D scene sub-graph groups includes at least two 2D scene sub-graphs having a same overlapping region, N being an integer greater than or equal to 1.

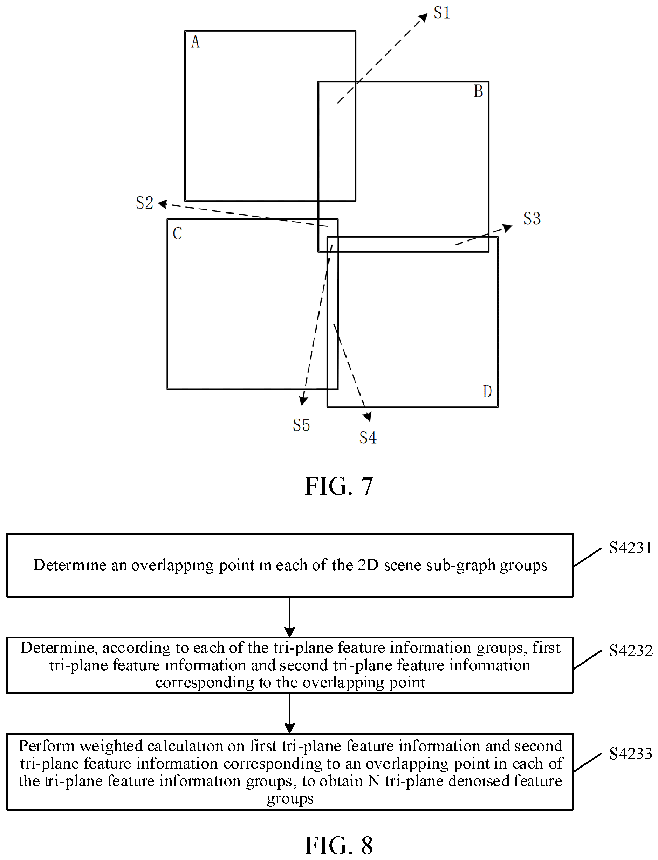

2D scene sub-graphs having a same overlapping region are grouped into one group. For example, as shown in FIG. 7, a 2D scene graph is partitioned to obtain 4 2D scene sub-graphs A, B, C, and D. The sub-graph A and the sub-graph B have a same overlapping region S1, the sub-graph B and the sub-graph C have a same overlapping region S2, the sub-graph B and the sub-graph D have a same overlapping region S3, the sub-graph C and the sub-graph D have a same overlapping region S4, and the sub-graph B, the sub-graph C, and the sub-graph D have a same overlapping region S5. Therefore, the 2D scene sub-graphs A, B, C, and D are grouped based on the same overlapping regions, to obtain 5 2D scene sub-graph groups [(A, B), (B, C), (B, D), (C, D), (B, C, D)].

S1422: Group the M pieces of tri-plane feature information according to the N 2D scene sub-graph groups, to obtain N tri-plane feature information groups.

Each of the tri-plane feature information groups includes tri-plane feature information corresponding to at least two 2D scene sub-graphs having a same overlapping region.

The N tri-plane feature information groups corresponding to the M pieces of tri-plane feature informa-

tion are determined according to the N 2D scene sub-graph groups, that is, tri-plane feature information corresponding to sub-graphs belonging to a same group belongs to a same tri-plane feature information group. For example, according to sub-operation S1421, the 2D scene sub-graphs A, B, C, and D are grouped according to the possessed same overlapping regions, to obtain 5 2D scene sub-graph groups [(A, B), (B, C), (B, D), (C, D), (B, C, D)], and tri-plane feature information $T_A$ corresponding to the 2D scene sub-graph A, tri-plane feature information $T_B$ corresponding to the 2D scene sub-graph B, tri-plane feature information $T_C$ corresponding to the 2D scene sub-graph C, tri-plane feature information $T_D$ corresponding to the 2D scene sub-graph D are grouped into 5 tri-plane feature information groups [($T_A$, $T_B$), ($T_B$, $T_C$), ($T_B$, $T_D$), ($T_C$, $T_D$), ($T_B$, $T_C$, $T_D$)] according to the 5 2D scene sub-graph groupss.

S1423: Input the N tri-plane feature information groups into the diffusion network in the diffusion sub-model, and perform denoising processing on the tri-plane feature information in each of the tri-plane feature information groups by the diffusion network, to obtain N tri-plane denoised feature groups.

The N tri-plane feature information groups correspond to N diffusion parameters.

The denoising processing is performed on the N tri-plane feature information groups by the diffusion network in a parameter-shared manner, to obtain N tri-plane denoised feature groups. Therefore, the N tri-plane feature information groups correspond to the N diffusion parameters. For example, during the diffusion processing performed on the 5 tri-plane feature information groups [($T_A$, $T_B$), ($T_B$, $T_C$), ($T_B$, $T_D$), ($T_C$, $T_D$), ($T_B$, $T_C$, $T_D$)] obtained according to sub-operation S1423, parameters for performing the diffusion processing on each group are the same, that is, when the diffusion processing is performed on the tri-plane feature information group ($T_A$, $T_B$), diffusion parameters of $T_A$ and $T_B$ are the same, when the diffusion processing is performed on the tri-plane feature information group ($T_B$, $T_C$), diffusion parameters of $T_B$ and $T_C$ are the same, when the diffusion processing is performed on the tri-plane feature information group ($T_B$, $T_D$), diffusion parameters of $T_B$ and $T_D$ are the same, when the diffusion processing is performed on the tri-plane feature information group ($T_C$, $T_D$), diffusion parameters of $T_C$ and $T_D$ are the same, and when the diffusion processing is performed on the tri-plane feature information group ($T_B$, $T_C$, $T_D$), diffusion parameters of $T_B$, $T_C$, and $T_D$ are the same.

S1424: Perform 3D merging and mapping on the tri-plane denoised feature information in each of the N tri-plane denoised feature groups to generate the 3D scene.

The 3D merging and mapping is performed on the tri-plane denoised feature information in each of the N tri-plane denoised feature groups, that is, the fusion processing is performed on the tri-plane denoised feature information in each group to generate the 3D scene. The 3D merging and mapping refers to a process of performing merging and mapping on a plurality of pieces of 3D data or features to generate a new 3D scene or model.

Further, 3D scene generated sub-blocks may be merged according to the tri-plane denoised feature information. Specifically, the 3D scene generated sub-blocks may be clustered according to a similarity of the tri-plane denoised feature information by using a clustering algorithm. For example, the clustering may be performed by using a K-Means algorithm. First, K initial centroids are selected, and then each 3D scene generated sub-block $S_i$ is allocated to a cluster in which a centroid closest to a weighted result thereof is located. Then, a centroid of each cluster is recalculated, and the foregoing operations are repeated until the distribution of the clusters no longer obviously changes. Finally, the 3D scene generated sub-blocks are merged according to a clustering result, so as to generate a 3D generated scene. A merging manner may be selected according to a specific application scene. For example, sub-blocks in a same cluster may be merged, or adjacent clusters may be merged.

In the 3D scene model generation method provided in this embodiment of this application, 2D scene sub-graphs having a same overlapping region are grouped into one group, and denoising processing and 3D merging and mapping are performed on tri-plane feature information in each group to generate a 3D scene. In this way, impact of noise on generation of the 3D scene can be reduced, and accuracy of the generation of the 3D scene can be improved. At the same time, the grouping processing can reduce the amount of calculation and improve the processing efficiency.

In an embodiment of the 3D scene model generation method according to the embodiment corresponding to FIG. 6 of this application, reference is made to FIG. 8, S1423 further includes S4231 to S4233. Specifically:

S4231: Determine an overlapping point in each of the 2D scene sub-graph groups.

The overlapping point is a point in an overlapping region of all 2D scene sub-graphs in the 2D scene sub-graph group.

An overlapping point is determined in an overlapping region of all 2D scene sub-graphs in each of the 2D scene sub-graph groups. The number of the overlapping points is not limited in this application. Preferably, the overlapping point may be a pixel point in the overlapping region.

S4232: Determine, according to each of the tri-plane feature information groups, first tri-plane feature information and second tri-plane feature information corresponding to the overlapping point.

The first tri-plane feature information is tri-plane feature information corresponding to the overlapping point in a first 2D scene sub-graph, the second tri-plane feature information is tri-plane feature information corresponding to the overlapping point in a second 2D scene sub-graph, and the first 2D scene sub-graph and the second 2D scene sub-graph are any two 2D scene sub-graphs in the 2D scene sub-graph group.

According to the tri-plane feature information group, two pieces of tri-plane feature information (the first tri-plane feature information and the second tri-plane feature information) of the overlapping point in an overlapping region of any two 2D scene sub-graphs (the first 2D scene sub-graph and the second 2D scene sub-graph) in the 2D scene sub-graph group are determined.

Further, it is assumed that there are L overlapping points, and the L overlapping points are respectively marked as $P_1$, $P_2$, ..., and $P_L$. For each overlapping point $P_i$, two planes $A_i$ and $B_i$ perpendicular to each other are found, such that a projection of $P_i$ is mapped to the two planes. For each of the planes $A_i$ and $B_i$, a direction of the plane may be represented by calculating a normal vector of the plane. The normal vector of the plane $A_i$ is marked as $n_{Ai}$, and the normal vector of the plane $B_i$ is marked as $n_{Bi}$. For each overlapping point $P_i$, coordinates $(x_{Ai}, y_{Ai})$ and $(x_{Bi}, y_{Bi})$ thereof on the two planes may be calculated. The coordinates may be obtained by performing weighted averaging on coordinates of projection points of the overlapping point $P_i$ on the two planes. Plane feature information of each overlapping point in two planes that are perpendicular to each other is obtained, so as to obtain generation coordinate information of each overlapping point, thereby providing accurate position information for a subsequent merging operation.

S4233: Perform weighted calculation on first tri-plane feature information and second tri-plane feature information corresponding to an overlapping point in each of the tri-plane feature information groups, to obtain N tri-plane denoised feature groups.

Weighted calculation is performed on first tri-plane feature information and second tri-plane feature information corresponding to each overlapping point, and a result of the weighted calculation is used as a tri-plane denoised feature group.

In the 3D scene model generation method provided in this embodiment of this application, by removing noise in the tri-plane feature information, a more accurate tri-plane denoised feature group is obtained, which provides more reliable input data for subsequent 3D generation, thereby improving the precision of 3D generation.

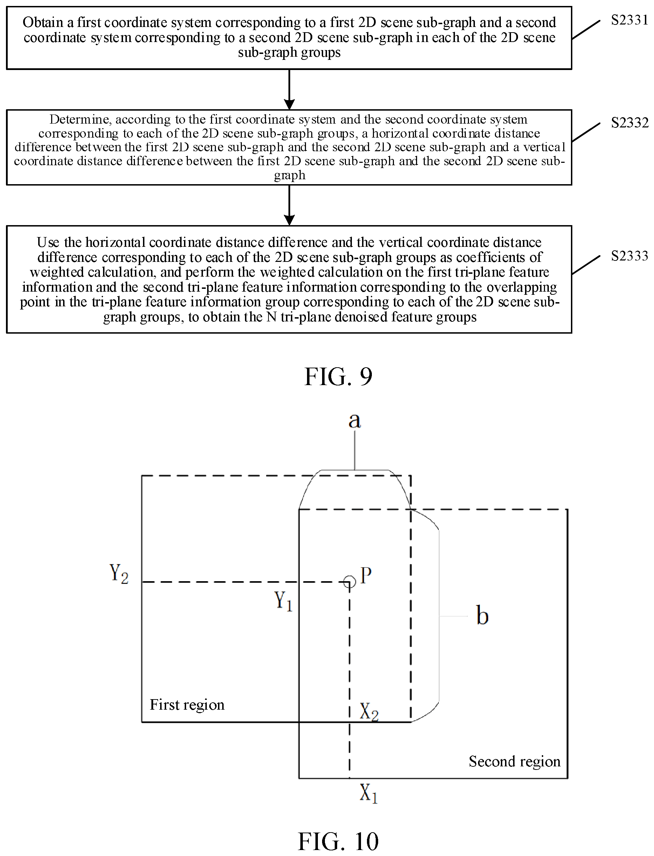

In an embodiment of the 3D scene model generation method according to the embodiment corresponding to FIG. 8 of this application, reference is made to FIG. 9, S4233 further includes the following S2331 to S2333. Specifically:

S2331: Obtain a first coordinate system corresponding to a first 2D scene sub-graph and a second coordinate system corresponding to a second 2D scene sub-graph in each of the 2D scene sub-graph groups.

A first coordinate system corresponding to each first 2D scene sub-graph and a second coordinate system corresponding to a second 2D scene sub-graph are obtained. A coordinate system is a mathematical system configured for describing a position and a direction of a point on a plane. Usually, a coordinate system of a plane may be represented by using a normal vector of the plane and one reference point.

S2332: Determine, according to the first coordinate system and the second coordinate system corresponding to each of the 2D scene sub-graph groups, a horizontal coordinate distance difference between the first 2D scene sub-graph and the second 2D scene sub-graph and a vertical coordinate distance difference between the first 2D scene sub-graph and the second 2D scene sub-graph.

According to the first coordinate system corresponding to the first 2D scene sub-graph and the second coordinate system corresponding to the second 2D scene sub-graph, distance differences between them in a horizontal coordinate direction and a vertical coordinate direction are determined. These distance differences may be configured for representing a relative spatial position relationship of two planes.

S2333: Use the horizontal coordinate distance difference and the vertical coordinate distance difference corresponding to each of the 2D scene sub-graph groups as coefficients of weighted calculation, and perform the weighted calculation on the first tri-plane feature information and the second tri-plane feature information corresponding to the overlapping point in the tri-plane feature information group corresponding to each of the 2D scene sub-graph groups, to obtain the N tri-plane denoised feature groups.

The weighted calculation is performed on the first tri-plane feature information and the second tri-plane feature information corresponding to the overlapping point in the tri-plane feature information group corresponding to each of the 2D scene sub-graph groups by using the horizontal coordinate distance difference and the vertical coordinate distance difference as coefficients of the weighted calculation. The weighted calculation is a common feature fusion method. Different weights are assigned to different features, so as to comprehensively consider impacts of the features on a final result. The weighted calculation is performed on the first tri-plane feature information and the second tri-plane feature information by using the two distance differences as weights, to obtain the N tri-plane denoised feature groups. Tri-plane denoised feature information in these tri-plane denoised feature groups is configured for a subsequent 3D generation process.

Further, the first tri-plane feature information includes first horizontal coordinate information and first vertical coordinate information, and the second tri-plane feature information includes second horizontal coordinate information and second vertical coordinate information. S2333 further includes the following operation:

using the horizontal coordinate distance difference corresponding to each of the 2D scene sub-graph groups as a weighting coefficient of the first horizontal coordinate information and the second horizontal coordinate information that correspond to each of the 2D scene sub-graph groups, using the vertical coordinate distance difference corresponding to each of the 2D scene sub-graph groups as a weighting coefficient of the first vertical coordinate information and the second vertical coordinate information that correspond to each of the 2D scene sub-graph groups, and performing the weighted calculation on first tri-plane feature information and second tri-plane feature information corresponding to the overlapping point in the tri-plane feature information group corresponding to each of the 2D scene sub-graph groups, to obtain N tri-plane denoised feature groups.

For example, as shown in FIG. 10, FIG. 10 is a schematic diagram of performing weighted processing on an overlapping point. For a point P falling in the overlapping region, projection features of two pieces of tri-plane feature information corresponding to the point are respectively (X1, Y1) and (X2, Y2). To enable geometries generated in two blocks to be seamlessly connected, weighted results of two pieces of tri-plane feature information are shared by using linear weighting. A first region and a second region are respectively two 2D planes, and a third region is an overlapping region of the first region and the second region. It is set that projection features of the tri-plane feature information of the point P in the first region are respectively (X1, Y1), and projection features in the second region are respectively (X2, Y2), so that:

$$Y1=(Y1+a\times Y2)/(1+a);$$

$$Y2=(Y2+a\times Y1)/(1+a);$$

$$X1=(X1+b\times X2)/(1+b);$$

$$X2=(X2+b\times X1)/(1+b);$$

where a is a distance difference between the first region and the second region on the horizontal coordinate, and b is a distance difference between the first region and the second region on the vertical coordinate.

For each overlapping point P, a weighted result thereof may be used as new coordinates of the overlapping point. Tri-plane feature mapping information of each overlapping point can be obtained by performing weighted processing on the tri-plane feature information of the overlapping point, thereby providing more accurate position information for a subsequent merging operation.

This embodiment of this application provides a 3D scene model generation method. The 3D scene generated sub-blocks are merged according to weighted results, so as to obtain a more accurate and more complete 3D generated scene, thereby improving the quality of the 3D generation.

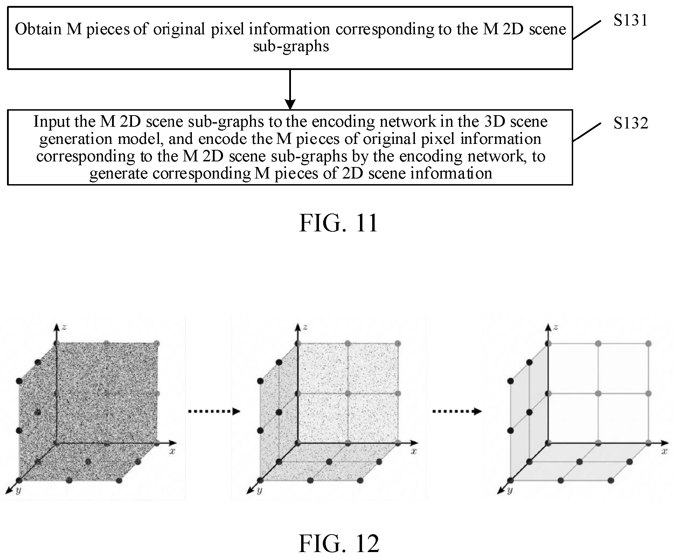

In an embodiment of the 3D scene model generation method according to the embodiment corresponding to FIG. 2 of this application, reference is made to FIG. 11, S130 further includes S131 to S132. Specifically:

S131: Obtain M pieces of original pixel information corresponding to the M 2D scene sub-graphs.

The original pixel information of each of the M 2D scene sub-graphs is obtained. Preferably, the original pixel information may be pixel point information of the sub-graph. Specifically, the original pixel information may be a color value, a luminance value, or the like of each pixel point.

S132: Input the M 2D scene sub-graphs into the encoding network in the 3D scene generation model, and encode the M pieces of original pixel information corresponding to the M 2D scene sub-graphs by the encoding network to generate corresponding M pieces of 2D scene information.

The encoding network is a deep learning model, and can perform feature extraction and encoding on the input 2D scene sub-graph, to convert original pixel information into a more abstract feature representation. The M pieces of original pixel information corresponding to the M 2D scene sub-graphs are encoded by the encoding network to generate M pieces of 2D scene information. These pieces of 2D scene information are results of feature extraction and encoding performed by the encoding network on the original pixel information, and may be used in a subsequent process of generating a 3D scene.

This embodiment of this application provides a 3D scene model generation method. The original pixel information of the 2D scene sub-graphs is encoded to generate 2D scene information, so that features and details of the scene can be better reserved, thereby improving the accuracy of the 3D scene generation. The plurality of 2D scene sub-graphs are preprocessed, so that the amount of calculation and the complexity of the 3D scene generation model can be reduced, thereby improving the efficiency of generating the 3D scene.

In an embodiment of the 3D scene model generation method according to the embodiment corresponding to FIG. 5 of this application, S141 further includes the following operation:

mapping M pieces of 2D scene information to three planes perpendicular to one another by the multi-layer perceptron network, to obtain M pieces of tri-plane feature information respectively corresponding to the three planes perpendicular to one another.

The 2D scene information is mapped to the three planes perpendicular to one another by a multi-layer perceptron (MLP). Specifically, the process may be divided into the following 3 operations.

1) Input: Input the M pieces of 2D scene information to the multi-layer perceptron network as an input.

2) Mapping: Map the input 2D scene information to three planes perpendicular to one another by a hidden layer and an output layer in the multi-layer perceptron network.

3) Output: Obtain M pieces of tri-plane feature information respectively corresponding to the three planes perpendicular to one another.

An objective of the process is to convert 2D scene information into feature information in a 3D space, so as to generate a 3D scene subsequently. By mapping the 2D scene information to the three planes perpendicular to one another, tri-plane feature information respectively corresponding to the three planes may be obtained. The feature information may be configured for describing information such as a depth, a height, and a direction of the scene, thereby better representing a structure and features of the 3D scene.

The multi-layer perceptron network is an artificial neural network model, and is composed of a plurality of neurons. These neurons form different layers through connections. In the multi-layer perceptron network, an input layer receives input data, a hidden layer processes and converts the input data, and an output layer outputs a result after the processing.

When the 2D scene information is mapped to three planes perpendicular to one another, the hidden layer and the output layer in the multi-layer perceptron network may play key roles. The neurons in the hidden layer may process and convert the input 2D scene information, and the neurons in the output layer may map the processed information to three planes perpendicular to one another.

In an actual application, a structure and parameters of the multi-layer perceptron network need to be designed and adjusted according to a specific task and data. By adjusting parameters such as the number of neurons in the hidden layer, a connection manner, and an activation function, a processing capability of the multi-layer perceptron network for input data and an output result may be changed. In addition, by training the multi-layer perceptron network, the multi-layer perceptron network can learn a mapping relationship between the input data and the output result, thereby improving a processing capability and generalization capability of the multi-layer perceptron network for unknown data.

This embodiment of this application provides a 3D scene model generation method. By performing mapping by the multi-layer perceptron network, complex features and relationships in the scene can be learned, thereby enhancing a representation capability for the scene. This can help the model better understand and generate the 3D scene, thereby improving the quality and precision of scene generation. In addition, the 2D scene information is mapped to the 3D space, so that the amount of calculation and the complexity can be reduced, and the calculation efficiency can be improved;

therefore, the model can generate the 3D scene more quickly, thereby improving the real-time performance and a response speed of the scene generation.

In an embodiment of the 3D scene model generation method according to the embodiment corresponding to FIG. 5 of this application, S142 further includes the following operation:

inputting the M pieces of tri-plane feature information to the diffusion network in the diffusion sub-model, and performing, by the diffusion network, K rounds of denoising processing on tri-plane feature information corresponding to the 2D scene sub-graphs in which the overlapping region exists to generate the 3D scene.

An input of each round of denoising processing is an output of a previous round of denoising processing, K being an integer greater than 1.

Specifically, the diffusion network is a deep learning model based on a generative adversarial network (GAN), and generates high-quality content such as an image or audio by introducing a diffusion process. In the diffusion sub-model, the diffusion network is configured for performing denoising processing on the tri-plane feature information to generate the 3D scene. In the diffusion network, an input of each round of denoising processing is an output of a previous round of denoising processing. The diffusion network learns a distribution feature of input data, and performs K rounds of parameter-shared denoising processing on tri-plane feature information corresponding to 2D scene sub-graphs in which the overlapping region exists to generate the 3D scene. In an actual application, a value of K usually needs to be adjusted according to a specific task and data. A larger value of K indicates more rounds of denoising processing and higher quality of a generated 3D scene. However, computational costs and time consumption are also increased. Therefore, a balance needs to be made between generation quality and computational efficiency.

Referring to FIG. 12, K rounds of denoising processing with a parameter being random noise are performed on the tri-plane feature information in an initial state to obtain tri-plane feature information having 3D geometrical significance, and further, a 3D scene may be obtained according to the tri-plane feature information. The M pieces of tri-plane feature information are input to the diffusion network in the diffusion sub-model, and K rounds of parameter-shared denoising processing is performed on the tri-plane feature information corresponding to the 2D scene sub-graphs in which the overlapping region exists to generate the 3D scene. This process can effectively utilize parameter sharing and denoising processing capabilities of the diffusion sub-model, and improve generation quality and efficiency of the 3D scene.

This embodiment of this application provides a 3D scene model generation method. By performing K rounds of parameter-shared denoising processing on the tri-plane feature information, the tri-plane feature information with 3D geometric significance can be generated, and then the 3D scene can be obtained. This effectively reduces information loss, improves computational efficiency, and helps the model better understand and generate the 3D scene.

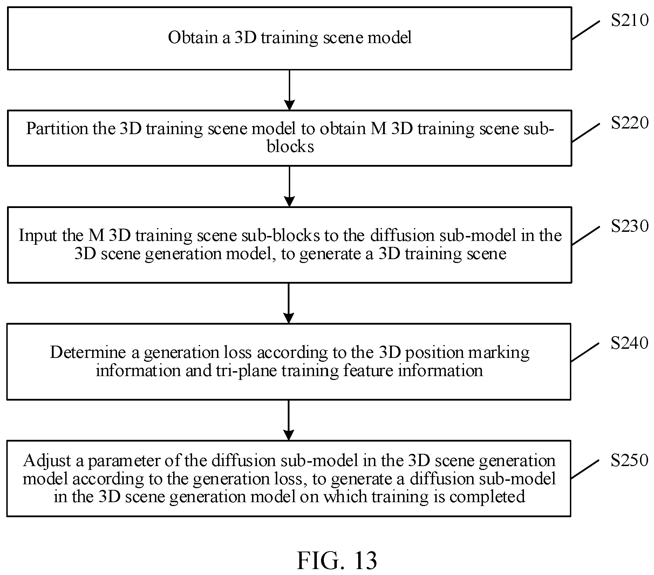

In an embodiment of the 3D scene model generation method according to the embodiment corresponding to FIG. 2 of this application, reference is made to FIG. 13, and the 3D scene model generation method further includes S210 to S250. Specifically:

S210: Obtain a 3D training scene model.

The 3D training scene model carries 3D position marking information.

A 3D training scene in a training set is obtained, and training is performed by using a 3D geometric scene dataset.

S220: Partition the 3D training scene model to obtain M 3D training scene sub-blocks.

There is at least one overlapping region between the M 3D training scene sub-blocks, M being an integer greater than 1.

Before the 3D training scene is partitioned, a mesh corresponding to the 3D training scene needs to be first converted into a watertight mesh. Preferably, a voxel remesh method in modeling software may be used to convert the mesh corresponding to the 3D training scene into the watertight mesh. The mesh after the watertight processing has an interior and an exterior that are strictly defined.

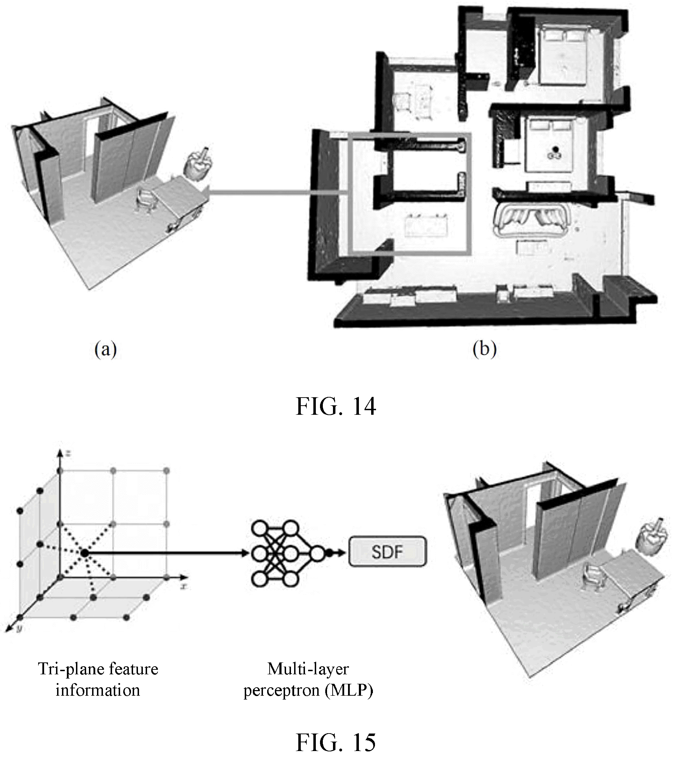

After the watertight processing is performed on the 3D training scene, the 3D training scene after the watertight processing is partitioned, to obtain M 3D training scene sub-blocks. Specifically, the 3D training scene after the watertight processing can be randomly cut into fixed-size 3D training scene sub-blocks, with each 3D training scene sub-block being a cube. Referring to FIG. 14, FIG. 14 is an example of partitioning an indoor scene, FIG. 14(a) is a sub-block obtained through partitioning, and FIG. 14(b) is a 3D training scene model of the indoor scene.

S230: Input the M 3D training scene sub-blocks to the diffusion sub-model in the 3D scene generation model to generate a 3D training scene.

The diffusion sub-model is configured to generate M pieces of tri-plane training feature information according to M 3D training scenes, and perform fusion processing on M pieces of tri-plane training feature information corresponding to M 3D training scene sub-blocks in which an overlapping region exists, to merge the M 3D training scene sub-blocks into a 3D training scene. The tri-plane training feature information is configured for representing 2D information of the 3D training scene in three planes perpendicular to one another.

Further, S230 further includes the following operations:

1) Input the M 3D training scene sub-blocks to the multi-layer perceptron network in the diffusion sub-model, and encode the M 3D training scene sub-blocks by the multi-layer perceptron network, to obtain M pieces of tri-plane training feature information.

As shown in FIG. 15, each 3D training scene sub-block is input to the multi-layer perceptron network, and signed distance function information corresponding to each 3D training scene sub-block is predicted by the multi-layer perceptron network according to the 3D training scene sub-block. The signed distance function information is configured for representing 3D position generation information of a pixel point.

A value of the signed distance function (SDF) is a sign of a distance to a surface of an object, that is, if a point is located outside the object, the value of the SDF is positive; if the point is located inside the object, the value of the SDF is negative; and if the point is located on the surface of the object, the value of the SDF is zero. Therefore, the SDF may be configured for representing a surface shape and a position of an object. The SDF may be calculated in a plurality of manners, and a common method is representing the SDF by using a distance field. The distance field is a 3D array in which each element represents a distance from a point to a surface of an object in a space. The SDF can be easily calculated by calculating the distance field.

2) Input the M pieces of tri-plane training feature information to the diffusion network in the diffusion sub-model, and perform, by the diffusion network, parameter-shared denoising processing on tri-plane training feature information corresponding to the 3D training scene sub-blocks in which the overlapping region exists to generate the 3D scene.

The M 3D training scene sub-blocks obtained through partitioning are input to the encoding network in the 3D scene generation model, and these sub-blocks are processed by the encoding network to generate the 3D training scene. In a preferred implementation, a denoising diffusion probabilistic model (DDPM) may be used as the diffusion sub-model. The DDPM is a generation model based on a diffusion process, and generates new samples by learning latent distribution of data. A core idea of the DDPM is to consider a data generation process as a diffusion process, that is, a process of gradually evolving from an initial state to a final state. By learning a probability density function of the diffusion process, the DDPM can generate a sample in a final state with a given initial state. A training process of the DDPM model includes two phases: a forward diffusion process and a reverse diffusion process. In the forward diffusion process, the DDPM starts from a random initial state, and gradually evolves to a final state through a series of diffusion operations. In each of the diffusion operations, the DDPM adds some noise to a current state, to simulate randomness in the diffusion process. In the reverse diffusion process, the DDPM starts from a final state, and gradually restores to an initial state through a series of denoising operations. In each of the denoising operations, the DDPM attempts to remove noise in a current state to recover an original sample. A generation process of the DDPM is to gradually evolve to a final state by using the forward diffusion process if an initial state is given, and then gradually restore to the initial state by using the reverse diffusion process, to finally obtain a generated sample.

To ensure accuracy of the 3D generated scene, it is necessary to achieve a smooth transition at connections between sub-blocks. In this embodiment of this application, a 3D large scene is obtained by merging diffusion generation processes of a plurality of small scenes.

In the method provided in this embodiment of this application, by sharing parameters of overlapping regions in a plurality of diffusion generation processes, geometric shapes of a plurality of overlapping 3D blocks may be seamlessly combined. Specifically, projection representations of points of the overlapping part on two pieces of tri-plane feature information are determined, weighted processing is performed on the projection representations, and a result is regarded as an input of a next denoising generation iteration, to finally obtain a 3D generated scene. In this method, first, the projection representations of the points of the overlapping part on the two pieces of tri-plane feature information need to be determined. These projection representations may be obtained by projecting the points of the overlapping part to two tri-planes and calculating coordinates of the points of the overlapping part on the tri-planes. Then, weighted processing is performed on these projection representations to consider their relative importance on the two tri-planes. The weighted processing may be completed by calculating a weight of each of the projections and adding the weights together. Next, the weighted projection representations are used as the input of the next denoising generation iteration. During each iteration, a new scene is generated by using a diffusion generation process. This process includes performing denoising on a scene and generating new details, to improve quality and accuracy of the scene. During each iteration, the weighted projection representation is used as an input, to ensure that geometric shapes of a plurality of overlapping 3D blocks can be seamlessly combined. By using this method, diffusion generation processes of a plurality of small scenes may be merged into one 3D large scene, while ensuring the accuracy and quality of the scene.

S240: Determine a generation loss according to the 3D position marking information and the tri-plane training feature information.

The generation loss is an index configured for measuring a generation effect of the 3D scene generation model. It may be obtained by calculating a generation error of each pixel point. The 3D position generation information is generated by the 3D scene generation model based on the tri-plane feature information of training pixel points, and the 3D position marking information is real position information of the training pixel points in the 3D training scene. Therefore, the generation loss may be obtained by calculating a generation error of each training pixel point, and the generation error may be obtained by calculating information such as a distance or an angle between the 3D position generation information and the 3D position marking information. A smaller generation loss indicates a better generation effect of the 3D scene generation model, and a larger generation loss indicates a poorer generation effect. By calculating the generation loss, the 3D scene generation model may be evaluated and optimized, to improve the generation effect of the 3D scene generation model.

S250: Adjust a parameter of the diffusion submodel in the 3D scene generation model according to the generation loss to generate a diffusion sub-model in the 3D scene generation model on which training is completed.

After the generation loss is calculated, gradients of parameters in the 3D scene generation model may be calculated by using a back propagation algorithm, and the parameters are adjusted according to the gradients. An objective of the adjustment is to minimize the generation loss, thereby improving the generation effect of the 3D scene generation model. By continuously adjusting the parameters, the 3D scene generation model can be gradually adapted to training data, thereby improving the generation effect of the 3D scene generation model. Finally, after iteration and adjustment are performed for a plurality of times, the 3D scene generation model on which training is completed may be obtained, for generating a new 3D scene.

This embodiment of this application provides a 3D scene model generation method. By determining the generation loss, the generation effect of the 3D scene generation model may be measured, thereby providing guidance for model optimization. The parameters of the 3D scene generation model are adjusted, so that the generation effect of the model can be improved, and the model is more adaptive to the training data. Further, generation precision and efficiency of the 3D scene generation model can be improved, thereby providing better support for an actual application.

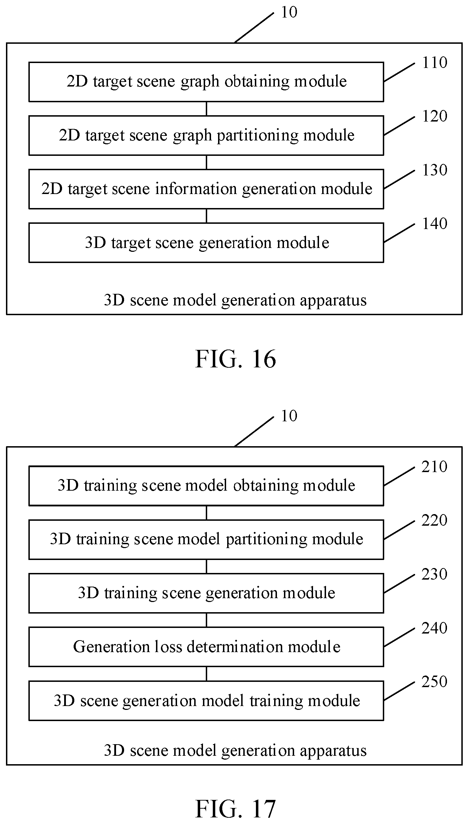

Referring to FIG. 16, the following describes a 3D scene model generation apparatus in this application in detail. FIG. 16 shows a 3D scene model generation apparatus according to an embodiment of this application, which includes: a 2D scene graph obtaining module 110, a 2D scene graph partitioning module 120, a 2D scene information generation module 130, and a 3D scene generation module 140. Specifically:

The 2D scene graph obtaining module 110 is configured to obtain a 2D scene graph, the 2D scene graph being configured to display configuration information of a to-be-generated 3D scene.

The 2D scene graph partitioning module 120 is configured to partition the 2D scene graph to obtain M 2D scene sub-graphs, at least one overlapping region existing between the M 2D scene sub-graphs, and M being an integer greater than 1.

The 2D scene information generation module 130 is configured to encode the M 2D scene sub-graphs respectively by an encoding network in a 3D scene generation model to generate corresponding M pieces of 2D scene information.

The 3D scene generation module 140 is configured to input the M pieces of 2D scene information to a diffusion sub-model in the 3D scene generation model to generate a 3D scene, the diffusion sub-model being configured to correspondingly generate M pieces of triplane feature information according to the M pieces of 2D scene information, and perform fusion processing on the M pieces of tri-plane feature information corresponding to the M 2D scene sub-graphs in which the overlapping region exists, the tri-plane feature information being configured for representing 2D information of the 2D scene information in three planes perpendicular to one another.

According to the 3D scene model generation apparatus provided in the embodiment of this application, the 2D scene graph is partitioned, the 2D scene information corresponding to the M 2D scene sub-graphs obtained by the partitioning are input to the diffusion submodel, the M pieces of 2D scene information are converted into the corresponding M 3D scene sub-blocks by the diffusion sub-model, and the 3D scene sub-blocks are merged in a parameter-shared diffusion manner to generate the 3D scene. The 2D scene graph of the large scene is partitioned to generate the corresponding 2D scene sub-graphs, and the 3D scene sub-blocks are merged to generate the 3D scene of the large-scale scene corresponding to the 2D scene graph of the large scene, thereby eliminating inconsistency of overlapping parts of the sub-blocks, and ensuring the accuracy of the 3D scene.

This embodiment of this application provides a simple and practical high-quality large-scale 3D scene generation tool. This embodiment of this application can give rise to new and diverse applications in fields such as extended reality (XR), robotics, and autonomous driving, and have broad application prospects, including generating large-scale user-defined 3D scene contents required by a metaverse, generating training scenes required by robots/autonomous driving automobiles, and the like. This embodiment of this application is widely applied to the game industry, including being used as a large-scale 3D scene editor of an open-world game, being used as a game development auxiliary tool to improve design and development efficiency of a game 3D scene map, and the like.

In an embodiment of the 3D scene model generation apparatus according to the embodiment corresponding to FIG. 16 of this application, the 3D scene generation module 140 is further configured to:

input the M pieces of 2D scene information to a multilayer perceptron network in the diffusion sub-model, and encode the M pieces of 2D scene information by the multi-layer perceptron network, to obtain M pieces of tri-plane feature information; and

input the M pieces of tri-plane feature information to a diffusion network in the diffusion sub-model, and perform, by the diffusion network, denoising processing on tri-plane feature information corresponding to the 2D scene sub-graphs in which the overlapping region exists to generate the 3D scene.

According to the 3D scene model generation apparatus provided in the embodiment of this application, the diffusion network performs the parameter-shared denoising processing on the tri-plane feature information corresponding to the 2D scene sub-graphs in which the overlapping region exists, that is, performs denoising and optimization on the tri-plane feature information corresponding to these sub-graphs, so that the tri-plane feature information can better represent the original 2D scene information, thereby effectively processing complex layouts and details of the large scene, and improving the efficiency and accuracy of generating the 3D scene.

In an embodiment of the 3D scene model generation apparatus according to the embodiment corresponding to FIG. 16 of this application, the 3D scene generation module 140 is further configured to:

group the M 2D scene sub-graphs according to the overlapping regions of the M 2D scene sub-graphs, to obtain N 2D scene sub-graph groups, each of the 2D scene sub-graph groups including at least two 2D scene sub-graphs with a same overlapping region, and N being an integer greater than or equal to 1;

group M pieces of tri-plane feature information according to the N 2D scene sub-graph groups, to obtain N tri-plane feature information groups, each of the tri-plane feature information groups including tri-plane feature information corresponding to at least two 2D scene sub-graphs having a same overlapping region;

input the N tri-plane feature information groups to the diffusion network in the diffusion sub-model, and perform denoising processing on tri-plane feature information in each of the tri-plane feature information groups by the diffusion network, to obtain N tri-plane denoised feature groups, the N tri-plane feature information groups corresponding to N diffusion parameters; and

perform 3D merging and mapping on the tri-plane denoised feature information in each of the N tri-plane denoised feature groups to generate the 3D scene.

In the 3D scene model generation apparatus provided in this embodiment of this application, 2D scene sub-graphs having a same overlapping region are grouped into one group, and denoising processing and 3D merging and mapping are performed on tri-plane feature information in each group to generate a 3D scene. In this way, impact of noise on generation of the 3D scene can be reduced, and accuracy of the generation of the 3D scene can be improved. At the same time, the grouping processing can reduce the amount of calculation and improve the processing efficiency.

In an embodiment of the 3D scene model generation apparatus according to the embodiment corresponding to FIG. 16 of this application, the 3D scene generation module 140 is further configured to:

determine an overlapping point in each of the 2D scene sub-graph groups, the overlapping point being a point in an overlapping region of all 2D scene sub-graphs in the 2D scene sub-graph group;

determine, according to each of the tri-plane feature information groups, first tri-plane feature information and second tri-plane feature information corresponding to the overlapping point, the first tri-plane feature information being tri-plane feature information corresponding to the overlapping point in a first 2D scene sub-graph, the second tri-plane feature information being tri-plane feature information corresponding to the overlapping point in a second 2D scene sub-graph, and the first 2D scene sub-graph and the second 2D scene sub-graph being any two 2D scene sub-graphs in the 2D scene sub-graph group; and

perform weighted calculation on first tri-plane feature information and second tri-plane feature information corresponding to an overlapping point in each of the tri-plane feature information groups, to obtain N tri-plane denoised feature groups.

In the 3D scene model generation apparatus provided in this embodiment of this application, by removing noise in the tri-plane feature information, a more accurate tri-plane denoised feature group is obtained, which provides more reliable input data for subsequent 3D generation, thereby improving the precision of 3D generation.

In an embodiment of the 3D scene model generation apparatus according to the embodiment corresponding to FIG. 16 of this application, the 3D scene generation module 140 is further configured to:

obtain a first coordinate system corresponding to a first 2D scene sub-graph and a second coordinate system corresponding to a second 2D scene sub-graph in each of the 2D scene sub-graph groups;

determine, according to the first coordinate system and the second coordinate system corresponding to each of the 2D scene sub-graph groups, a horizontal coordinate distance difference between the first 2D scene sub-graph and the second 2D scene sub-graph and a vertical coordinate distance difference between the first 2D scene sub-graph and the second 2D scene sub-graph; and

use the horizontal coordinate distance difference and the vertical coordinate distance difference corresponding to each of the 2D scene sub-graph groups as coefficients of weighted calculation, and perform the weighted calculation on the first tri-plane feature information and the second tri-plane feature information corresponding to the overlapping point in the tri-plane feature information group corresponding to each of the 2D scene sub-graph groups, to obtain the N tri-plane denoised feature groups.

This embodiment of this application provides a 3D scene model generation apparatus. The 3D scene generated sub-blocks are merged according to weighted results, so as to obtain a more accurate and more complete 3D generated scene, thereby improving the quality of the 3D generation.

In an embodiment of the 3D scene model generation apparatus according to the embodiment corresponding to FIG. 16 of this application, the first tri-plane feature information includes first horizontal coordinate information and first vertical coordinate information, and second tri-plane feature information includes second horizontal coordinate information and second vertical coordinate information; and

the 3D scene generation module 140 is further configured to use the horizontal coordinate distance difference corresponding to each of the 2D scene sub-graph groups as a weighting coefficient of the first horizontal coordinate information and the second horizontal coordinate information that correspond to each of the 2D scene sub-graph groups, use the vertical coordinate distance difference corresponding to each of the 2D scene sub-graph groups as a weighting coefficient of the first vertical coordinate information and the second vertical coordinate information that correspond to each of the 2D scene sub-graph groups, and perform the weighted calculation on first tri-plane feature information and second tri-plane feature information corresponding to the overlapping point in the tri-plane feature information group corresponding to each of the 2D scene sub-graph groups, to obtain N tri-plane denoised feature groups.

This embodiment of this application provides a 3D scene model generation apparatus. The 3D scene generated sub-blocks are merged according to weighted results, so as to obtain a more accurate and more complete 3D generated scene, thereby improving the quality of the 3D generation.

In an embodiment of the 3D scene model generation apparatus according to the embodiment corresponding to FIG. 16 of this application, the 2D scene information generation module 130 is further configured to:

obtain M pieces of original pixel information corresponding to the M 2D scene sub-graphs; and

input the M 2D scene sub-graphs to the encoding network in the 3D scene generation model, and encode the M pieces of original pixel information corresponding to the M 2D scene sub-graphs by the encoding network to generate corresponding M pieces of 2D scene information.

This embodiment of this application provides a 3D scene model generation apparatus. The original pixel information of the 2D scene sub-graphs is encoded to generate 2D scene information, so that features and details of the scene can be better reserved, thereby improving the accuracy of the 3D scene generation. The plurality of 2D scene sub-graphs are preprocessed, so that the amount of calculation and the complexity of the 3D scene generation model can be reduced, thereby improving the efficiency of generating the 3D scene.

In an embodiment of the 3D scene model generation apparatus according to the embodiment corresponding to FIG. 16 of this application, the 3D scene generation module 140 is further configured to:

map, by the multi-layer perceptron network, the M pieces of 2D scene information to three planes perpendicular to one another, to obtain M pieces of tri-plane feature information respectively corresponding to the three planes perpendicular to one another. In an embodiment of the 3D scene model generation apparatus according to the embodiment corresponding to FIG. 16 of this application, the 3D scene generation module 140 is further configured to:

input the M pieces of tri-plane feature information to the diffusion network in the diffusion sub-model, and perform, by the diffusion network, K rounds of denoising processing on tri-plane feature information corresponding to the 2D scene sub-graphs in which the overlapping region exists to generate the 3D scene, an input of each round of denoising processing being an output of a previous round of denoising processing.

This embodiment of this application provides a 3D scene model generation apparatus. By performing K rounds of parameter-shared denoising processing on the tri-plane feature information, the tri-plane feature information with 3D geometric significance can be generated, and then the 3D scene can be obtained. This effectively reduces information loss, improves computational efficiency, and helps the model better understand and generate the 3D scene.

In an embodiment of the 3D scene model generation apparatus according to the embodiment corresponding to FIG. 16 of this application, referring to FIG. 17, the 3D scene model generation apparatus 10 further includes: a 3D training scene model obtaining module 210, a 3D training scene model partitioning module 220, a 3D training scene generation module 230, a generation loss determination module 240, and a 3D scene generation model training module 250. Specifically:

The 3D training scene model obtaining module 210 is configured to obtain a 3D training scene model, the 3D training scene model carrying 3D position marking information.

The 3D training scene model partitioning module 220 is configured to partition the 3D training scene model, to obtain M 3D training scene sub-blocks, at least one overlapping region existing between the M 3D training scene sub-blocks, and M being an integer greater than 1.

The 3D training scene generation module 230 is configured to input the M 3D training scene sub-blocks to the diffusion sub-model in the 3D scene generation model to generate a 3D training scene, the diffusion sub-model being configured to correspondingly generate M pieces of tri-plane training feature information according to the M 3D training scene sub-blocks, and merge the M 3D training scene sub-blocks into the 3D training scene by performing fusion processing on the M pieces of tri-plane training feature information corresponding to the M 3D training scene sub-blocks in which the overlapping region exists, the tri-plane training feature information being configured for representing 2D information of the 3D training scene in the three planes perpendicular to one another.

The generation loss determination module 240 is configured to determine a generation loss according to the 3D position marking information and the tri-plane training feature information.

The 3D scene generation model training module 250 is configured to adjust a parameter of the diffusion sub-model in the 3D scene generation model according to the generation loss to generate a diffusion sub-model in the 3D scene generation model on which training is completed.

In an embodiment of the 3D scene model generation apparatus according to the embodiment corresponding to FIG. 17 of this application, the 3D training scene generation module 230 is further configured to:

input the M 3D training scene sub-blocks to the multilayer perceptron network in the diffusion sub-model, and encode the M 3D training scene sub-blocks by the multi-layer perceptron network, to obtain M pieces of tri-plane training feature information; and

input the M pieces of tri-plane training feature information to the diffusion network in the diffusion sub-model, and perform, by the diffusion network, denoising processing on tri-plane training feature information corresponding to the 3D training scene sub-blocks in which the overlapping region exists to generate the 3D scene.

This embodiment of this application provides a 3D scene model generation apparatus. By determining the generation loss, the generation effect of the 3D scene generation model may be measured, thereby providing guidance for model optimization. The parameters of the 3D scene generation model are adjusted, so that the generation effect of the model can be improved, and the model is more adaptive to the training data. Further, generation precision and efficiency of the 3D scene generation model can be improved, thereby providing better support for an actual application.

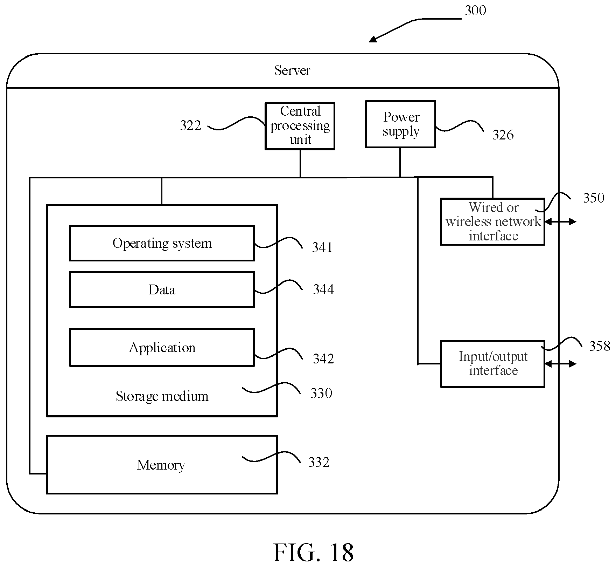

FIG. 18 is a schematic diagram of a structure of a server according to an embodiment of this application. The server 300 may vary greatly due to different configurations or performance, and may include one or more central processing units (CPUs) 322 (for example, one or more processors), a memory 332, and one or more storage media 330 (for example, one or more mass storage devices) that store application programs 342 or data 344. The memory 332 and the storage medium 330 may be transient or persistent storages. The program stored in the storage medium 330 may include one or more modules (not shown in the figure), and each module may include a series of instructions and operations for the server. Still further, the CPU 322 may be configured to communicate with the storage medium 330, and perform, on the server 300, a series of instructions and operations in the storage medium 330.

The server 300 may further include one or more power supplies 326, one or more wired or wireless network interfaces 350, one or more input/output interfaces 358, and/or one or more operating systems 341, for example, Windows ServerTM, Mac OS XTM, UnixTM, LinuxTM, or FreeBSDTM.

Operations performed by the server in the foregoing embodiment may be based on the server structure shown in FIG. 15.

A person skilled in the art may clearly understand that, for convenient and concise description, for a specific working process of the foregoing described system, apparatus, and unit, refer to a corresponding process in the foregoing method embodiments, and details are not described herein again.

In the several embodiments provided in this application, the disclosed system, apparatus, and method may be implemented in other manners. For example, the described apparatus embodiments are merely exemplary. For example, the division of the units is merely the division of logic functions, and may use other division manners during actual implementation. For example, a plurality of units or components may be combined, or may be integrated into another system, or some features may be omitted or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one place, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, a part contributing to the related art, or all or some of the technical solutions may be implemented in a form of a software product. The computer software product is stored in a storage medium and includes several instructions for instructing a computer device (which may be a personal computer, a server, a network device, or the like) to perform all or some of the operations of the methods in embodiments of this application. The foregoing storage medium includes: any medium that can store program code, such as a USB flash drive, a removable hard disk, a read-only memory (ROM), a random access memory (RAM), a magnetic disk, a compact disc, or the like.

In conclusion, the foregoing embodiments are merely intended for describing the technical solutions of this application, but not for limiting this application. Although this application is described in detail with reference to the foregoing embodiments, a person of ordinary skilled in the art is to understand that modifications may still be made to the technical solutions described in the foregoing embodiments or equivalent replacements may be made to some technical features, and such modifications or replacements do not cause the essence of the corresponding technical solutions to depart from the spirit and scope of embodiments of this application.

**Claims**

1. A three-dimensional (3D) scene model generation method, the method being executable by a computer device, comprising:

obtaining a two-dimensional (2D) scene graph, the 2D scene graph comprising configuration information of a to-be-generated 3D scene;
partitioning the 2D scene graph to obtain M 2D scene sub-graphs, from which at least two 2D scene sub-graphs overlap with each other to result in at least one first overlapping region, M being an integer greater than 1;
encoding the M 2D scene sub-graphs respectively through an encoding network to generate M pieces of 2D scene information; and
inputting the M pieces of 2D scene information to a diffusion sub-model to generate a 3D scene model, the diffusion sub-model being configured to generate M 3D scene sub-blocks according to the M pieces of 2D scene information, the M 3D scene sub-blocks comprising M pieces of tri-plane feature information, and the diffusion sub-model being further configured to merge the M 3D scene sub-blocks into the 3D scene by performing fusion processing on pieces of tri-plane feature information corresponding to 2D scene sub-graphs in which the first overlapping region exists, the tri-plane feature information comprising 2D information of the 2D scene information in three planes perpendicular to one another.

2. The method according to claim 1, wherein the inputting the M pieces of 2D scene information to a diffusion sub-model to generate a 3D scene model comprises:

inputting the M pieces of 2D scene information to a multi-layer perceptron network in the diffusion sub-model, and encoding the M pieces of 2D scene information through the multi-layer perceptron network, to obtain M pieces of tri-plane feature information; and
inputting the M pieces of tri-plane feature information to a diffusion network in the diffusion sub-model, and performing, through the diffusion network, denoising processing on the pieces of tri-plane feature information corresponding to the 2D scene sub-graphs in which the first overlapping region exists to generate the 3D scene model.

3. The method according to claim 2, wherein the inputting the M pieces of tri-plane feature information to a diffusion network in the diffusion sub-model, and performing, by the diffusion network, denoising processing on the pieces of tri-plane feature information corresponding to the 2D scene sub-graphs in which the first overlapping region exists to generate the 3D scene model comprises:

grouping the M 2D scene sub-graphs according to the at least one first overlapping region, to obtain N 2D scene sub-graph groups, each 2D scene sub-graph group of the N 2D scene sub-graph groups comprising at least two 2D scene sub-graphs with a same first overlapping region, and N being an integer greater than or equal to 1; grouping the M pieces of tri-plane feature information according to the N 2D scene sub-graph groups, to obtain N tri-plane feature information groups, each tri-plane feature information group of the N tri-plane feature information groups comprising tri-plane feature information corresponding to at least two 2D scene sub-graphs having a same first overlapping region; inputting the N tri-plane feature information groups to the diffusion network in the diffusion sub-model, and performing denoising processing on tri-plane feature information in each tri-plane feature information group of the N tri-plane feature information groups through the diffusion network, to obtain N tri-plane denoised feature groups, the N tri-plane feature information groups corresponding to N diffusion parameters; and performing 3D merging and mapping on the tri-plane denoised feature information in each tri-plane denoised feature group of the N tri-plane denoised feature groups to generate the 3D scene model.

4. The method according to claim 3, wherein the inputting the N tri-plane feature information groups to the diffusion network in the diffusion sub-model, and performing denoising processing on tri-plane feature information in each tri-plane feature information group of the N tri-plane feature information groups through the diffusion network, to obtain N tri-plane denoised feature groups comprises:

   determining an overlapping point in each 2D scene sub-graph group of the N 2D scene sub-graph groups, the overlapping point being a point in first overlapping regions of all 2D scene sub-graphs in the 2D scene sub-graph group; determining, according to each tri-plane feature information group of the N tri-plane feature information groups, first tri-plane feature information and second tri-plane feature information corresponding to the overlapping point, the first tri-plane feature information being tri-plane feature information corresponding to the overlapping point in a first 2D scene sub-graph, the second tri-plane feature information being tri-plane feature information corresponding to the overlapping point in a second 2D scene sub-graph, and the first 2D scene sub-graph and the second 2D scene sub-graph being any two 2D scene sub-graphs in the 2D scene sub-graph group; and performing weighted calculation on first tri-plane feature information and second tri-plane feature information respectively corresponding to an overlapping point in each tri-plane feature information group of the N tri-plane feature information groups, to obtain the N tri-plane denoised feature groups.

5. The method according to claim 4, wherein the performing weighted calculation on first tri-plane feature information and second tri-plane feature information respectively corresponding to an overlapping point in each tri-plane feature information group of the N tri-plane feature information groups, to obtain the N tri-plane denoised feature groups comprises:

   obtaining a first coordinate system corresponding to a first 2D scene sub-graph and a second coordinate system corresponding to a second 2D scene sub-graph in each of the 2D scene sub-graph groups; determining, according to the first coordinate system and the second coordinate system corresponding to each of the 2D scene sub-graph groups, a horizontal coordinate distance difference between the first 2D scene sub-graph and the second 2D scene sub-graph, and a vertical coordinate distance difference between the first 2D scene sub-graph and the second 2D scene sub-graph; and using the horizontal coordinate distance difference and the vertical coordinate distance difference corresponding to each of the 2D scene sub-graph groups as coefficients for weighted calculation, and performing the weighted calculation on the first tri-plane feature information and the second tri-plane feature information corresponding to the overlapping point in the tri-plane feature information groups respectively corresponding to each 2D scene sub-graph group of the N 2D scene sub-graph groups, to obtain the N tri-plane denoised feature groups.

6. The method according to claim 5, wherein the first tri-plane feature information comprises first horizontal coordinate information and first vertical coordinate information, and the second tri-plane feature information comprises second horizontal coordinate information and second vertical coordinate information; and the using the horizontal coordinate distance difference and the vertical coordinate distance difference corresponding to each of the 2D scene sub-graph groups as coefficients for weighted calculation, and performing the weighted calculation on the first tri-plane feature information and the second tri-plane feature information corresponding to the overlapping point in the tri-plane feature information groups respectively corresponding to each 2D scene sub-graph group of the N 2D scene sub-graph groups, to obtain the N tri-plane denoised feature groups comprises:

using the horizontal coordinate distance difference corresponding to each of the 2D scene sub-graph groups as a weighting coefficient of the first horizontal coordinate information and the second horizontal coordinate information that correspond to each 2D scene sub-graph group of the N 2D scene sub-graph groups, using the vertical coordinate distance difference corresponding to each 2D scene sub-graph group of the N 2D scene sub-graph groups as a weighting coefficient of the first vertical coordinate information and the second vertical coordinate information that correspond to each of the 2D scene sub-graph groups, and performing the weighted calculation on the first tri-plane feature information and the second tri-plane feature information corresponding to the overlapping point in the tri-plane feature information groups respectively corresponding to each 2D scene sub-graph group of the N 2D scene sub-graph groups, to obtain the N tri-plane denoised feature groups.

7. The method according to any one of claims 1 to 6, wherein the encoding the M 2D scene sub-graphs respectively through an encoding network to generate M pieces of 2D scene information comprises:

obtaining M pieces of original pixel information corresponding to the M 2D scene sub-graphs; and

inputting the M 2D scene sub-graphs to the encoding network, and encoding the M pieces of original pixel information corresponding to the M 2D scene sub-graphs through the encoding network to generate the M pieces of 2D scene information.

8. The method according to any one of claims 2 to 6, wherein the inputting the M pieces of 2D scene information to a multi-layer perceptron network in the diffusion sub-model, and encoding the M pieces of 2D scene information through the multi-layer perceptron network, to obtain M pieces of tri-plane feature information comprises:

mapping, through the multi-layer perceptron network, the M pieces of 2D scene information to three planes perpendicular to one another, to obtain M pieces of tri-plane feature information respectively corresponding to the three planes perpendicular to one another.

9. The method according to any one of claims 2 to 6 and 8, wherein the inputting the M pieces of tri-plane feature information to a diffusion network in the diffusion sub-model, and performing, through the diffusion network, denoising processing on the pieces of tri-plane feature information corresponding to the 2D scene sub-graphs in which the first overlapping region exists to generate the 3D scene model comprises:

inputting the M pieces of tri-plane feature information to the diffusion network in the diffusion sub-model, and performing, through the diffusion network, K rounds of denoising processing on the pieces of tri-plane feature information corresponding to the 2D scene sub-graphs in which the first overlapping region exists to generate the 3D scene model, an input of each round of denoising processing being an output of a previous round of denoising processing, and K being an integer greater than 1.

10. The method according to any one of claims 1 to 9, wherein the method further comprises:

obtaining a 3D training scene model, the 3D training scene model carrying 3D position marking information;

partitioning the 3D training scene model to obtain M 3D training scene sub-blocks, from which at least two 3D training scene sub-blocks overlap with each other to result in at least one second overlapping region, M being an integer greater than 1;

inputting the M 3D training scene sub-blocks to the diffusion sub-model to generate a 3D training scene, the diffusion sub-model being configured to generate M pieces of tri-plane training feature information according to the M 3D training scene sub-blocks, and merge the M 3D training scene sub-blocks into the 3D training scene by performing fusion processing on pieces of tri-plane training feature information corresponding to 3D training scene sub-blocks in which the second overlapping region exists, the tri-plane training feature information comprising 2D information of the 3D training scene in the three planes perpendicular to one another;

determining a generation loss according to the 3D position marking information and the tri-plane training feature information; and

adjusting a parameter of the diffusion sub-model according to the generation loss to generate a diffusion sub-model on which training is completed.

11. The method according to claim 10, wherein the inputting the M 3D training scene sub-blocks to the diffusion sub-model to generate a 3D training scene comprises:

inputting the M 3D training scene sub-blocks to the multi-layer perceptron network in the diffusion sub-model, and encoding the M 3D training scene sub-blocks through the multi-layer perceptron network to obtain M pieces of tri-plane training feature information; and

inputting the M pieces of tri-plane training feature information to the diffusion network in the diffusion sub-model, and performing, through the diffusion network, denoising processing on the pieces of tri-plane training feature information corresponding to the 3D training scene sub-blocks in which the second overlapping region exists to generate the 3D training scene.

12. A three-dimensional (3D) scene model generation apparatus, the apparatus being deployed on a computer device, comprising:

a two-dimensional (2D) scene graph obtaining module configured to obtain a 2D scene graph, the 2D scene graph comprising configuration information of a to-be-generated 3D scene;

a 2D scene graph partitioning module configured to partition the 2D scene graph to obtain M 2D scene sub-graphs, from which at least two 2D scene sub-graphs overlap with each other to result in at least one first overlapping region, M being an integer greater than 1;

a 2D scene information generation module configured to encode the M 2D scene sub-graphs respectively through an encoding network to generate M pieces of 2D scene information; and

a 3D scene generation module configured to input the M pieces of 2D scene information to a diffusion sub-model to generate a 3D scene model, the diffusion sub-model being configured to generate M 3D scene sub-blocks according to the M pieces of 2D scene information, the M 3D scene sub-blocks comprising M pieces of tri-plane feature information, and the diffusion sub-model being further configured to merge the M 3D scene sub-blocks into the 3D scene by performing fusion processing on pieces of tri-plane feature information corresponding to 2D scene sub-graphs in which the first overlapping region exists, the tri-plane feature information comprising 2D information of the 2D scene information in three planes perpendicular to one another.

13. A computer device, comprising: a memory, a transceiver, a processor, and a bus system,

the memory being configured to store a program;

the processor being configured to execute the program in the memory, the executing comprising performing the three-dimensional (3D) scene model generation method according to any one of claims 1 to 11; and

the bus system being configured to connect the memory and the processor, to cause the memory to communicate with the processor.

14. A computer-readable storage medium, comprising instructions which, when run on a computer, cause the computer to perform the three-dimensional (3D) scene model generation method according to any one of claims 1 to 11.

15. A computer program product, comprising a computer program which is executed by a processor to perform the three-dimensional (3D) scene model generation method according to any one of claims 1 to 11.

FIG. 1

| Obtain a 2D scene graph | S110 |

| Partition the 2D scene graph to obtain M 2D scene sub-graphs | S120 |

| Encode the M 2D scene sub-graphs respectively by an encoding network in a 3D scene generation model, to generate corresponding M pieces of 2D scene information | S130 |

| Input the M pieces of 2D scene information to a diffusion sub-model in the 3D scene generation model to generate a 3D scene | S140 |

FIG. 2

(a)

(b)

FIG. 3

FIG. 4

| | |
|---|---|
| Input the M pieces of 2D scene information to a multi-layer perceptron network in the diffusion sub-model, and encode the M pieces of 2D scene information by the multi-layer perceptron network, to obtain M pieces of tri-plane feature information | S141 |
| Input the M pieces of tri-plane feature information to a diffusion network in the diffusion sub-model, and perform, by the diffusion network, denoising processing on tri-plane feature information corresponding to the 2D scene sub-graphs in which the overlapping region exists, to generate the 3D scene | S142 |

FIG. 5

Group the M 2D scene sub-graphs according to the overlapping regions of the M 2D scene sub-graphs, to obtain N 2D scene sub-graph groups — S1421

Group the M pieces of tri-plane feature information according to the N 2D scene sub-graph groups, to obtain N tri-plane feature information groups — S1422

Input the N tri-plane feature information groups to the diffusion network in the diffusion sub-model, and perform denoising processing on the tri-plane feature information in each of the tri-plane feature information groups by the diffusion network, to obtain N tri-plane denoised feature groups — S1423

Perform 3D merging and mapping on the tri-plane denoised feature information in each of the N tri-plane denoised feature groups, to generate the 3D scene — S1424

FIG. 6

FIG. 7

| Determine an overlapping point in each of the 2D scene sub-graph groups | S4231 |
|---|---|
| Determine, according to each of the tri-plane feature information groups, first tri-plane feature information and second tri-plane feature information corresponding to the overlapping point | S4232 |
| Perform weighted calculation on first tri-plane feature information and second tri-plane feature information corresponding to an overlapping point in each of the tri-plane feature information groups, to obtain N tri-plane denoised feature groups | S4233 |

FIG. 8

EP 4 773 086 A1

| Obtain a first coordinate system corresponding to a first 2D scene sub-graph and a second coordinate system corresponding to a second 2D scene sub-graph in each of the 2D scene sub-graph groups | S2331 |

| Determine, according to the first coordinate system and the second coordinate system corresponding to each of the 2D scene sub-graph groups, a horizontal coordinate distance difference between the first 2D scene sub-graph and the second 2D scene sub-graph and a vertical coordinate distance difference between the first 2D scene sub-graph and the second 2D scene sub-graph | S2332 |

| Use the horizontal coordinate distance difference and the vertical coordinate distance difference corresponding to each of the 2D scene sub-graph groups as coefficients of weighted calculation, and perform the weighted calculation on the first tri-plane feature information and the second tri-plane feature information corresponding to the overlapping point in the tri-plane feature information group corresponding to each of the 2D scene sub-graph groups, to obtain the N tri-plane denoised feature groups | S2333 |

FIG. 9

FIG. 10

29

Obtain M pieces of original pixel information corresponding to the M 2D scene sub-graphs $\diagup$ S131

Input the M 2D scene sub-graphs to the encoding network in the 3D scene generation model, and encode the M pieces of original pixel information corresponding to the M 2D scene sub-graphs by the encoding network, to generate corresponding M pieces of 2D scene information $\diagup$ S132

FIG. 11

FIG. 12

| | |
|---|---|
| Obtain a 3D training scene model | S210 |

↓

| | |
|---|---|
| Partition the 3D training scene model to obtain M 3D training scene sub-blocks | S220 |

↓

| | |
|---|---|
| Input the M 3D training scene sub-blocks to the diffusion sub-model in the 3D scene generation model, to generate a 3D training scene | S230 |

↓

| | |
|---|---|
| Determine a generation loss according to the 3D position marking information and tri-plane training feature information | S240 |

↓

| | |
|---|---|
| Adjust a parameter of the diffusion sub-model in the 3D scene generation model according to the generation loss, to generate a diffusion sub-model in the 3D scene generation model on which training is completed | S250 |

**FIG. 13**

(a)                                   (b)

## FIG. 14

Tri-plane feature          Multi-layer
information            perceptron (MLP)

SDF

## FIG. 15

10

| 2D target scene graph obtaining module | 110 |
| 2D target scene graph partitioning module | 120 |
| 2D target scene information generation module | 130 |
| 3D target scene generation module | 140 |

3D scene model generation apparatus

FIG. 16

10

| 3D training scene model obtaining module | 210 |
| 3D training scene model partitioning module | 220 |
| 3D training scene generation module | 230 |
| Generation loss determination module | 240 |
| 3D scene generation model training module | 250 |

3D scene model generation apparatus

FIG. 17

300

Server

322 — Central processing unit

Power supply

326

350
Wired or wireless network interface

Operating system — 341

Data — 344

Application — 342

Storage medium — 330

358
Input/output interface

Memory — 332

FIG. 18

## INTERNATIONAL SEARCH REPORT

| International application No. |
| --- |
| **PCT/CN2024/114603** |

| A. | CLASSIFICATION OF SUBJECT MATTER |
| --- | --- |

G06T17/00(2006.01)i

According to International Patent Classification (IPC) or to both national classification and IPC

| B. | FIELDS SEARCHED |
| --- | --- |

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; DWPI; VEN; USTXT; EPTXT; CNKI: IEEE; 必应, BING: 三维, 场景, 扩散模型, 分块, 裁剪, 融合, 二维, 重叠, 交叉, three dimension, scene, diffusion model, partition, crop, fusion, two dimension, overlap, intersection

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117437361 A (ZHONGBA GROUP CO., LTD.) 23 January 2024 (2024-01-23) description, paragraphs 75-268 | 1-15 |
| A | KIM, Seung wook et al. "NeuralField-LDM: Scene Generation with Hierarchical Latent Diffusion Models" 2023 IEEE/CVF Conference on Computer Vision and Pattern Recognition(CVPR), 22 August 2023 (2023-08-22), ISSN: 2575-7075, page 8496 | 1-15 |
| A | SHUE, J. R. et al. "3D Neural Field Generation using Triplane Diffusion" 必应, BING, [在线, Online], [检索日, Search Date 2024-10-18].[检索于因特网, Search on the Internet]: URL: https://arxiv.org/pdf/2211.16677, 30 November 2022 (2022-11-30), page 1 | 1-15 |
| A | CN 112907451 A (TENCENT TECHNOLOGY (SHENZHEN) CO., LTD.) 04 June 2021 (2021-06-04) entire document | 1-15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 October 2024** | **15 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/114603**

**C.      DOCUMENTS CONSIDERED TO BE RELEVANT**

| Category* | Citation of document, with indication, where appropriate, of the relevant passages | Relevant to claim No. |
|---|---|---|
| A | CN 104021587 A (HUNAN UNIVERSITY) 03 September 2014 (2014-09-03)<br>entire document | 1-15 |
| A | US 2023095092 A1 (NVIDIA CORP.) 30 March 2023 (2023-03-30)<br>entire document | 1-15 |

Form PCT/ISA/210 (second sheet) (July 2022)

**INTERNATIONAL SEARCH REPORT**
**Information on patent family members**

International application No.

**PCT/CN2024/114603**

| Patent document cited in search report | | | Publication date (day/month/year) | Patent family member(s) | | | Publication date (day/month/year) |
|---|---|---|---|---|---|---|---|
| CN | 117437361 | A | 23 January 2024 | None | | | |
| CN | 112907451 | A | 04 June 2021 | None | | | |
| CN | 104021587 | A | 03 September 2014 | CN | 104021587 | B | 14 July 2017 |
| US | 2023095092 | A1 | 30 March 2023 | None | | | |

Form PCT/ISA/210 (patent family annex) (July 2022)